# EUROPEAN PATENT APPLICATION

(11) **EP 4 845 053 A1**
(43) Date of publication of application: **25.11.2026**
(21) Application number: 25751112.1
(22) Date of filing: 16.01.2025
(51) Int. Cl.: H04B 7/22, H04W 16/28

(54) **COMMUNICATION METHOD AND APPARATUS**

(30) Priority: 06.02.2024 CN 202410172339
(71) Applicant: Huawei Technologies Co., Ltd., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Huawei European IPR
(86) International application number: PCT/CN2025/072736
(87) International publication number: WO 2025/167510

(57) **Abstract**

This application provides a communication method, including: receiving at least one reference signal sent by a second apparatus; and reporting information about a target reference signal and/or beam information associated with the target reference signal to a third apparatus, where the at least one reference signal includes the target reference signal, and the target reference signal is a reference signal that meets a first condition. The communication method in this application can adapt to wireless sensing scenarios for signal sending and receiving.

## Description

This application claims priority to Chinese Patent Application No. 202410172339.3, filed with the China National Intellectual Property Administration on February 6, 2024 and entitled "COMMUNICATION METHOD AND APPARATUS THEREOF", which is incorporated herein by reference in its entirety.

### TECHNICAL FIELD

Embodiments of the present invention relate to the technical fields of wireless communication, wireless sensing, integrated wireless sensing and communication, and the like, and specifically, to a communication method and an apparatus thereof.

### BACKGROUND

In a communication technology, data or information is transmitted via various communication media. For wireless communication, transmission and communication are performed via a wireless communication medium such as a radio wave.

The wireless communication is, for example, used to implement efficient data transmission between apparatuses. A wireless sensing technology infers, based on received wireless signals, a position, a motion status, and various characteristics of an object, a person, or another entity in an environment.

Signal transmission is mostly considered for wireless communication scenarios. For example, in a wireless communication scenario, higher energy or power of a signal received by a receiver indicates higher communication efficiency. However, in a wireless sensing scenario, a transmission path with strongest signal energy or power is usually a direct path or a line-of-sight (line-of-sight, LoS) path, and usually, no sensing target is present on the transmission path. Therefore, the signal on the transmission path is applicable to wireless communication, but is not applicable to wireless sensing. Therefore, how to adapt to wireless sensing scenarios for signal sending and receiving is a technical problem to be urgently resolved.

### SUMMARY

This application provides a communication method (which may also be understood as a wireless sensing method or an integrated sensing and communication method), a communication apparatus (which may also be understood as a wireless sensing apparatus or an integrated sensing and communication apparatus), a communication system (which may also be understood as a wireless sensing system or an integrated sensing and communication system), and a computer-readable storage medium.

According to a first aspect, this application relates to a communication method, applied to a first apparatus, and including: receiving at least one reference signal sent by a second apparatus; and reporting information about a target reference signal and/or beam information associated with the target reference signal to a third apparatus, where the at least one reference signal includes the target reference signal, the target reference signal is a reference signal that meets a first condition, and the first condition includes at least one of the following:

Condition 1: It is determined, based on the target reference signal, that a scatterer is present. The condition may alternatively be understood as that the target reference signal is scattered or reflected by a scatterer and then arrives at the first apparatus, or a part of power or energy of the target reference signal is scattered or reflected by a scatterer and then arrives at the first apparatus, or a scatterer is present on a transmission path of the target reference signal.

When the first apparatus and the second apparatus receive and send a reference signal RSᵢ (where the RSᵢ is one of the at least one reference signal sent by the second apparatus) over different beams, energy and power distribution of the reference signal RSᵢ on different transmission paths may be changed. For example, when the first apparatus and the second apparatus steer beams toward a direct path, most of energy and power of the reference signal RSᵢ arrive at the first apparatus through the direct path. Therefore, the power of the reference signal RSᵢ received by the first apparatus is mainly the power of the reference signal RSᵢ transmitted to the first apparatus through the direct path. In this case, a measurement result of the RSᵢ by the first apparatus mainly includes characteristics of a direct path channel between the first apparatus and the second apparatus, and basically does not include characteristics of another scatterer. In this case, the reference signal does not meet Condition 1. For another example, when the first apparatus and the second apparatus steer beams toward a transmission path formed via scattering or reflection by a scatterer, most of energy and power of the reference signal arrive at the first apparatus through a scattered path. In this case, a measurement result of the RSᵢ by the first apparatus mainly includes characteristics of a scattered path channel between the first apparatus and the second apparatus, and the characteristics of the scattered path channel actually reflect characteristics of the scatterer. In this case, the reference signal meets Condition 1. Specifically, the first apparatus may determine, based on the measurement result of the reference signal by employing an algorithm such as presence detection, whether a scatterer is present.

Condition 2: It is determined, based on the target reference signal, that a mobile scatterer is present. This may be understood as that the target reference signal is scattered or reflected by a mobile scatterer and then arrives at the first apparatus, or a part of power or energy of the target reference signal is scattered or reflected by a mobile scatterer and then arrives at the first apparatus, or a mobile scatterer is present on a transmission path of the target reference signal.

For example, when the first apparatus and the second apparatus steer beams toward a transmission path formed via scattering and reflection by a mobile scatterer, most of energy and power of the reference signal arrive at the first apparatus through a scattered path. In this case, a measurement result of the RSᵢ by the first apparatus mainly includes characteristics of a scattered path channel between the first apparatus and the second apparatus, and the characteristics of the scattered path channel actually reflect characteristics of the mobile scatterer. Specifically, the first apparatus may determine, by employing an algorithm such as presence detection, whether a scatterer is present, and then calculate a Doppler frequency by detecting the measurement result of the reference signal, to determine whether the scatterer moves.

Condition 3: It is determined, based on the target reference signal, that a probability of scatterer presence is greater than or equal to a first probability threshold. This may be understood as a probability that the target reference signal is scattered or reflected by a scatterer and then arrives at the first apparatus, or a probability that a part of power or energy of the target reference signal is scattered or reflected by a scatterer and then arrives at the first apparatus, or a probability that a scatterer is present on a transmission path of the target reference signal is greater than or equal to the first probability threshold.

For example, the probability of scatterer presence may be determined by employing an algorithm such as presence detection.

Condition 4: It is determined, based on the target reference signal, that a probability of mobile scatterer presence is greater than or equal to a second probability threshold. This may be understood as a probability that the target reference signal is scattered or reflected by a mobile scatterer and then arrives at the first apparatus, or a probability that a part of power or energy of the target reference signal is scattered or reflected by a mobile scatterer and then arrives at the first apparatus, or a probability that a mobile scatterer is present on a transmission path of the target reference signal is greater than or equal to the first probability threshold.

For example, a probability of scatterer presence may be determined by employing an algorithm such as presence detection, and then a Doppler frequency is calculated by detecting the measurement result of the reference signal, to determine whether the scatterer moves.

Condition 5: A first signal power obtained by measuring the target reference signal is greater than or equal to a first power threshold, where the first signal power is a signal power within a first delay range, or a first signal amplitude (or an amplitude sum) obtained by measuring the target reference signal is greater than or equal to a first amplitude threshold, where the first signal amplitude (or the amplitude sum) is an amplitude (or an amplitude sum) within a first delay range.

Due to a multipath effect, when multiple paths are present in a transmission environment, a reference signal RSᵢ may be transmitted from the second apparatus to the first apparatus through multiple paths. These paths include, for example, a direct path and a transmission path formed via scattering or reflection by a scatterer, and different transmission paths have different delays and gain coefficients. Generally, the direct path has a small delay and a large gain coefficient, and the transmission path formed via scattering or reflection by a scatterer has a large delay and a small gain coefficient. After receiving the reference signal RSᵢ, the first apparatus processes the measurement result of the reference signal to obtain a delay power spectrum. The delay power spectrum may reflect delay distribution of different transmission paths and power distribution (positively correlated to an absolute value of an amplitude) corresponding to each delay. In addition, when the second apparatus and the first apparatus receive and send the reference signal RSᵢ over different beams, energy and power distribution of the reference signal RSᵢ on different transmission paths may be changed. A transmission delay of each path corresponds to a sum of a distance between an associated scatterer and the first apparatus and a distance between the associated scatterer and the second apparatus. Therefore, if only a scatterer within a specific distance range is to be sensed, after the reference signal RSᵢ is received and sent over a specific beam, the first apparatus may measure a signal power within a specific delay range (corresponding to the first delay range). If the signal power within the delay range is high (for example, a high signal power is embodied as being greater than or equal to the first power threshold), it demonstrates that a large portion of the power of the reference signal RSᵢ arrives at the first apparatus via one or more scatterers, and the one or more scatterers are within the specific distance range.

Condition 6: A second signal power obtained by measuring the target reference signal is greater than or equal to a second power threshold, where the second signal power is a signal power within a first Doppler frequency range, or a second signal amplitude (or an amplitude sum) obtained by measuring the target reference signal is greater than or equal to a second amplitude threshold, where the second signal amplitude (or the amplitude sum) is an amplitude (or an amplitude sum) within a first Doppler frequency range.

Due to a multipath effect, when multiple paths are present in a transmission environment, a reference signal RSᵢ may be transmitted from the second apparatus to the first apparatus through multiple paths. These paths include, for example, a direct path and a transmission path formed via scattering or reflection by a scatterer, and different transmission paths have different Doppler frequencies and gain coefficients. After receiving the reference signal RSᵢ, the first apparatus processes the measurement result of the reference signal RSᵢ to obtain a Doppler power spectrum. The Doppler power spectrum may reflect Doppler frequency distribution of different transmission paths and power distribution (positively correlated to an absolute value of a gain coefficient) corresponding to each Doppler frequency. In addition, when the second apparatus and the first apparatus receive and send the reference signal RSᵢ over different beams, energy and power distribution of the reference signal RSᵢ on different transmission paths may be changed. Therefore, in this case, if only a scatterer within a specific motion velocity range or a specific motion frequency range (for example, whether a person is present is determined through breath detection) is to be sensed, after the reference signal RSᵢ is sent and received over a specific beam, the first apparatus may measure a signal power within a specific Doppler frequency range (corresponding to the first Doppler frequency range). If the signal power within the Doppler frequency range is high (for example, a high signal power is embodied as being greater than or equal to the second power threshold), it demonstrates that a large portion of the power of the reference signal RSᵢ arrives at the first apparatus via one or more scatterers, and the one or more scatterers are within the specific motion velocity range or the motion frequency range.

Condition 7: A third signal power obtained by measuring the target reference signal is greater than or equal to a third power threshold, where the third signal power is a signal power within the first Doppler frequency range and the first delay range, or a third signal amplitude (or an amplitude sum) obtained by measuring the target reference signal is greater than or equal to a third amplitude threshold, where the third signal amplitude (or the amplitude sum) is an amplitude (or an amplitude sum) within the first Doppler frequency range and first delay range.

Condition 8: A similarity (which may also be understood as a correlation) between a measurement result of the target reference signal and a measurement result of a baseline reference signal is less than or equal to a similarity threshold (which may also be understood as a correlation threshold), where the baseline reference signal is associated with the target reference signal.

Whether a new sensing target appears in a current environment may be determined according to the foregoing Condition 8. For example, when it is determined, based on the baseline reference signal (associated with a fine beam), that a scatterer A is present in the current environment, if a reference signal RSᵢ is associated with a coarse beam and covers the fine beam, the first apparatus determines, based on the RSᵢ, that a scatterer X is present. The scatterer X may be the scatterer A, or may be a scatterer different from the scatterer A, and a similarity between a measurement result of the reference signal RSᵢ and the measurement result of the baseline reference signal may reflect whether the scatterer X is the scatterer A.

For example, the similarity is a similarity between a delay spectrum of the target reference signal and a delay spectrum of the baseline reference signal, or the similarity is a similarity between a Doppler spectrum of the target reference signal and a Doppler spectrum of the baseline reference signal, or the similarity is a similarity between a delay-Doppler spectrum of the target reference signal and a delay-Doppler spectrum of the baseline reference signal.

The delay-Doppler spectrum may represent power, amplitude, or energy distribution in a delay dimension and a Doppler frequency dimension.

For example, the baseline reference signal is associated with a baseline beam, the target reference signal is associated with a target beam, and the target beam covers the baseline beam.

Condition 9: A variation of a measurement result of the target reference signal is greater than or equal to a variation threshold.

Whether a new sensing target appears in a current environment may be determined according to the foregoing Condition 9. For example, appearance of a new scatterer under a beam may lead to a change of a channel measurement result under the beam. Therefore, in Condition 9, a target beam may be determined based on the variation of the measurement result. The measurement result may specifically be a channel response coefficient, a delay spectrum, a Doppler spectrum, a delay-Doppler spectrum, or the like.

For example, before the reporting the information about the target reference signal to the third apparatus, the method further includes:
receiving configuration information sent by the third apparatus, where the configuration information indicates the first apparatus to report information about a reference signal that meets the first condition.

For example, before the reporting the information about the target reference signal to the third apparatus, the method further includes:
receiving configuration information sent by the third apparatus, where the configuration information includes at least one of the following: the first power threshold, the first delay range, the second power threshold, the first Doppler frequency range, the third power threshold, the first probability threshold, the second probability threshold, the similarity threshold, and the variation threshold.

When a measurement result of a reference signal meets the first condition, it may be considered that the measurement result of the reference signal includes sensing information of a scatterer or a mobile scatterer, or includes sensing information of a scatterer or a mobile scatterer with a high probability, or includes a scatterer within a specific distance range or a specific motion velocity range, or the like.

For example, before the reporting the information about the target reference signal to the third apparatus, the method further includes: receiving configuration information sent by the third apparatus, where the configuration information includes information about at least one transmit beam and/or information about at least one receive beam, each of the at least one reference signal is associated with one of the at least one transmit beam, and/or each of the at least one reference signal is associated with one of the at least one receive beam.

Beam information may specifically include one or more of the following: a beam identifier, a beam direction, a beam width, and the like.

When the first apparatus and the second apparatus receive and send a reference signal over a beam, a signal-to-noise ratio or a signal-to-interference-plus-noise ratio of a measurement result for sensing a scatterer can be improved. In addition, configuring the beam information in the configuration information implements scatterer scanning and sensing in a specific direction and at a specific position performed by the first apparatus and the second apparatus.

For example, the first Doppler frequency range is predefined as a non-zero Doppler frequency range.

The first Doppler frequency range being zero indicates that a velocity of a scatterer is zero, and the Doppler frequency is used to determine a motion velocity of the scatterer. In some scenarios, performing wireless sensing on a stationary scatterer is of slight significance. Therefore, the communication method in embodiments of the present disclosure may, for example, focus on a mobile scatterer by using a non-zero first Doppler frequency range. In addition, the first Doppler frequency range may be, for example, predefined in a standard, to reduce configuration overheads. Alternatively, the first Doppler frequency range may be, for example, preconfigured.

For example, the first power threshold is determined based on a fourth signal power and a first difference or a first ratio, the fourth signal power is a signal power of a first reference signal within the first delay range, and the first reference signal is associated with the target reference signal.

For example, the second power threshold is determined based on a fifth signal power and a second difference or a second ratio, the fifth signal power is a power of a first reference signal within the first Doppler frequency range, and the first reference signal is associated with the target reference signal.

For example, the third power threshold is determined based on a sixth signal power and a third difference or a third ratio, the sixth signal power is a signal power of a first reference signal within the first delay range and within the first Doppler frequency range, and the sixth reference signal is associated with the target reference signal.

For example, the first reference signal is associated with a first beam, the target reference signal is associated with a target beam, and the first beam covers the target beam.

According to the communication method in this application, a finer target beam may be determined from the beam associated with the first reference signal based on the first power threshold, the second power threshold, and the third power threshold. The target beam has higher resolution, and wireless sensing accuracy and performance are higher.

For example, the first signal power is calculated according to one of the following formulas: ${A}_{1} {\int }_{D ∈ Γ} {\left|{\sum }_{k} {H}_{k} exp \left(j2πD\frac{k}{{N}_{1}}\right)\right|}^{2} ,$ or ${A}_{1} {{\sum }_{D ∈ Γ} \left|{\sum }_{k} {H}_{k} exp \left(j2πD\frac{k}{{N}_{1}}\right)\right|}^{2} ,$ where
*Γ* represents the first delay range, *Hₖ* represents a channel response coefficient, on a frequency domain unit k, determined based on the measurement result of the target reference signal, D represents a delay within the first delay range, *N*₁ is determined based on a bandwidth of the target reference signal, or *N*₁ represents a quantity of inverse discrete Fourier transform IDFT points, and *A*₁ is a constant.

For example, the first signal power is determined based on a power of a path with a highest power among multiple target paths, the multiple target paths are multiple paths determined based on the target reference signal, and a delay of each of the multiple target paths falls within the first delay range.

A power of a path whose delay is *Dₚ* is determined according to the following formula: ${A}_{1} {\left|{\sum }_{k} {H}_{k} exp \left(j2{πD}_{p}\frac{k}{{N}_{1}}\right)\right|}^{2} ,$ where
*Hₖ* represents a channel response coefficient, on a frequency domain unit k, determined based on the measurement result of the target reference signal, *N*₁ is determined based on a bandwidth of the target reference signal; or *N*₁ represents a quantity of inverse discrete Fourier transform IDFT points, and *A*₁ is a constant.

For example, the second signal power is calculated according to one of the following formulas: ${A}_{2} {\int }_{f ∈ Λ} {\left|{\sum }_{i} {H}_{i} exp \left(j2{πfT}_{i}\right)\right|}^{2} ,$ or ${A}_{2} {\sum }_{f ∈ Λ} {\left|{\sum }_{i} {H}_{i} exp \left(j2{πfT}_{i}\right)\right|}^{2} ,$ where
*Λ* represents the first Doppler frequency range, *Hᵢ* represents a channel response coefficient, on a time unit i, determined based on the measurement result of the target reference signal, f represents a Doppler frequency within the first Doppler frequency range, and *Tᵢ* represents a moment corresponding to the time unit i.

For example, the second signal power is determined based on a power of a path with a highest power among multiple target paths, the multiple target paths are multiple paths determined based on the target reference signal, and a Doppler frequency of each of the multiple target paths falls within the first Doppler frequency range.

A power of a path whose Doppler frequency is *f* is determined according to the following formula: ${A}_{2} {\left|{\sum }_{i} {H}_{i} exp \left(-j2{πfT}_{i}\right)\right|}^{2} ,$ where
*Hᵢ* represents a channel response coefficient, on a time unit i, determined based on the measurement result of the target reference signal, *Tᵢ* represents a moment corresponding to the time unit i, and f represents a Doppler frequency within the first Doppler frequency range.

According to a second aspect, this application relates to a communication method, applied to a third apparatus. The communication method includes: receiving information about a target reference signal and/or beam information associated with the target reference signal reported by a first apparatus, where the target reference signal is a reference signal that meets a first condition, and the first condition includes at least one of the following:
a first signal power obtained by measuring the target reference signal is greater than or equal to a first power threshold, where the first signal power is a signal power within a first delay range;
a second signal power obtained by measuring the target reference signal is greater than or equal to a second power threshold, where the second signal power is a signal power within a first Doppler frequency range;
a third signal power obtained by measuring the target reference signal is greater than or equal to a third power threshold, where the third signal power is a signal power within the first Doppler frequency range and the first delay range;
determining, based on the target reference signal, that a scatterer is present;
determining, based on the target reference signal, that a mobile scatterer is present;
determining, based on the target reference signal, that a probability of scatterer presence is greater than or equal to a first probability threshold;
determining, based on the target reference signal, that a probability of mobile scatterer presence is greater than or equal to a second probability threshold;
a similarity between a measurement result of the target reference signal and a measurement result of a baseline reference signal is less than or equal to a similarity threshold, where the baseline reference signal is associated with the target reference signal; and
a variation of a measurement result of the target reference signal is greater than or equal to a variation threshold.

For example, before the receiving the information about the target reference signal reported by the first apparatus, the method further includes: sending configuration information to the first apparatus, where the configuration information indicates the first apparatus to report information about a reference signal that meets the first condition.

For example, before the receiving the information about the target reference signal reported by the first apparatus, the method further includes: sending configuration information to the first apparatus, where the configuration information includes at least one of the following: the first power threshold, the first delay range, the second power threshold, the first Doppler frequency range, the third power threshold, the first probability threshold, the second probability threshold, the similarity threshold, and the variation threshold.

For example, the communication method further includes: sending at least one reference signal to the first apparatus, where the at least one reference signal includes the target reference signal.

For example, before the receiving the information about the target reference signal reported by the first apparatus, the method further includes: sending configuration information to the first apparatus, where the configuration information includes information about at least one transmit beam and/or information about at least one receive beam, each of the at least one reference signal is associated with one of the at least one transmit beam, and/or each of the at least one reference signal is associated with one of the at least one receive beam.

According to a third aspect, this application relates to a communication apparatus, which includes a transceiver module, where the transceiver module is configured to perform the foregoing communication method in the first aspect.

According to a fourth aspect, this application relates to a communication apparatus, which includes a transceiver module, where the transceiver module is configured to perform the foregoing communication method in the second aspect.

For example, the communication apparatus may include a processor and an interface circuit. The interface circuit is configured to receive a signal from another communication apparatus other than the communication apparatus and transmit the signal to the processor, or send a signal from the processor to another communication apparatus other than the communication apparatus. The processor is configured to perform the foregoing communication method by using a logic circuit or by executing code instructions.

For example, the instructions are stored in a memory. The memory is communicatively connected to or coupled to the processor.

For example, the communication apparatus is a chip.

According to a fifth aspect, this application relates to a communication system, which includes a first apparatus and a third apparatus.

For example, the communication system further includes a second apparatus configured to send at least one reference signal to the first apparatus.

According to a sixth aspect, this application relates to a chip module, which includes a transceiver component and a chip, where the chip is configured to perform the foregoing communication method.

According to a seventh aspect, this application relates to a computer-readable storage medium storing computer instructions, where when the computer instructions are executed, a computer is caused to perform the foregoing communication method. In some embodiments, the computer-readable storage medium is a non-transitory storage medium.

According to an eighth aspect, this application relates to a computer program product, which includes computer program code. The computer program code is stored in a readable storage medium, and when the computer program code is executed, a computer is caused to implement the foregoing communication method.

### BRIEF DESCRIPTION OF DRAWINGS

The following describes accompanying drawings used in embodiments of this application.
FIG. 1 schematically shows a diagram of wireless communication;
FIG. 2A schematically shows a diagram of a system architecture of a communication method according to an embodiment of the present disclosure;
FIG. 2B schematically shows a diagram of another system architecture of a communication method according to an embodiment of the present disclosure;
FIG. 2C schematically shows a diagram of still another system architecture of a communication method according to an embodiment of the present disclosure;
FIG. 3 schematically shows an interaction diagram of a communication method according to an embodiment of the present disclosure;
FIG. 4 schematically shows a diagram of sending a reference signal and receiving a reference signal over a transmit beam and a receive beam corresponding to FIG. 1;
FIG. 5A schematically shows an interaction diagram of performing a communication method by a communication system according to an embodiment of the present disclosure;
FIG. 5B schematically shows a diagram of improving wireless sensing accuracy through beam training;
FIG. 6A schematically shows an interaction diagram of performing a communication method by a communication system according to an embodiment of the present disclosure;
FIG. 6B schematically shows a diagram of a communication method according to an embodiment of the present disclosure for continuously sensing whether a new sensing target appears in a current environment;
FIG. 7 schematically shows an interaction diagram of a communication method according to another embodiment of the present disclosure;
FIG. 8 schematically shows a flowchart of a communication method performed by a third apparatus according to an embodiment of the present disclosure;
FIG. 9 schematically shows a diagram of a communication apparatus according to an embodiment of the present disclosure;
FIG. 10 schematically shows a diagram of a communication apparatus according to another embodiment of the present disclosure; and
FIG. 11 shows a block diagram of an example communication apparatus that may be used to implement still another embodiment of the present disclosure.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this application describes only an association relationship for describing associated objects and represents that three relationships may exist. For example, A and/or B may indicate the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

It should be understood that in this application, "at least one (item)" refers to one or more and "multiple" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The following describes in detail a related background of the communication method in embodiments of the present disclosure.

In a communication technology, data or information is transmitted via various communication media. For wireless communication, transmission and communication are performed via a wireless communication medium such as a radio wave.

The wireless communication is, for example, used to implement efficient data transmission between apparatuses.

Different from wireless communication technologies, a wireless sensing technology infers, based on received wireless signals, a position, a motion status, and various characteristics of an object, a person, or another entity in an environment.

In a wireless sensing technology, a transmitter may radiate electromagnetic waves to a surrounding environment to send a specific signal, and a receiver may correspondingly receive a signal reflected by the environment. The receiver and the transmitter may compare and analyze an association relationship between the received signal and the sent signal, and analyze related information of the surrounding environment. The related information of the surrounding environment may include, for example, whether a sensing target is present in the environment, a distance between the sensing target and receiver and a distance between the sensing target and the transmitter, directions of the sensing target relative to the receiver and the transmitter, where the direction may be represented by an angle in a horizontal direction and an angle in a vertical direction, motion velocities of the sensing target relative to the receiver and the transmitter, and the like.

For example, in a vehicle-to-everything scenario, a vehicle may obtain surrounding environment information through wireless sensing. The environment information may include position information and velocity information of a mobile sensing target such as a vehicle and a pedestrian, and information about a stationary sensing target such as a road surface and a fence. For another example, in a scenario such as an airport, a device configured to monitor uncrewed aerial vehicles may be deployed, to prevent safety impact on takeoff and landing of passenger planes at the airport. For another example, in a home environment, intruder detection may be performed through wireless sensing, to improve safety and privacy in the home environment.

With the development of communication technologies, integrated sensing and communication (integrated sensing and communication, ISAC) becomes a future development trend, and the integrated sensing and communication may be understood as combining existing communication and sensing functions. One objective of the integrated sensing and communication is to implement communication and sensing using a same signal on a same spectrum, so as to avoid interference, and improve spectrum utilization. It is a preferential path for technology and industry development. In addition, wireless communication and wireless sensing are are exhibiting increasing similarities in terms of system design, signal processing, and data processing. Implementing communication and sensing by using a same device or by sharing some device components, so as to reduce device costs, sizes, and power consumption, is also a preferential product form. In addition, the development of technologies such as extra-large-scale antenna, large bandwidth, reconfigurable intelligent surface (RIS), and artificial intelligence will further advance the development of sensing technologies. For example, the integrated sensing and communication may be applied to fields such as Internet of Vehicles, smart factories, and smart healthcare.

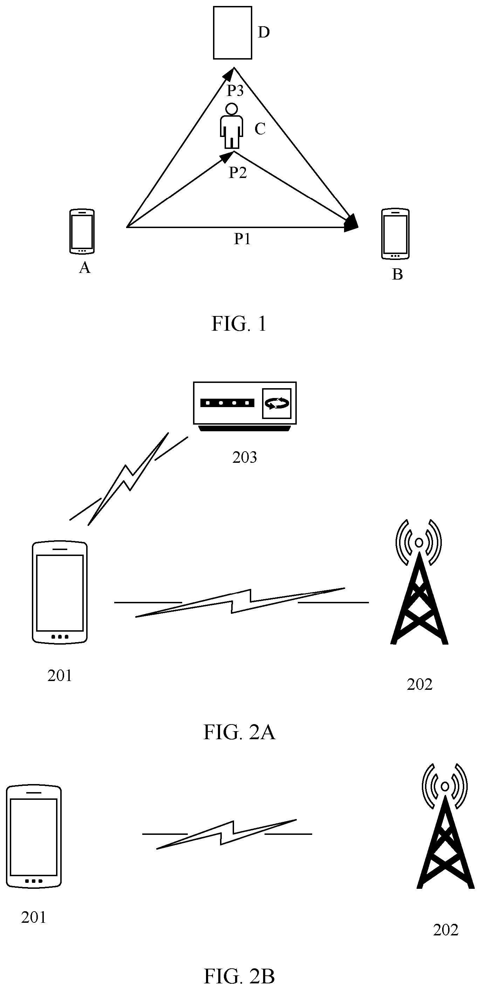

FIG. 1 schematically shows a diagram of wireless communication. In the example in FIG. 1, two communication parties present in a current environment are an apparatus A and an apparatus B. The apparatus A is a transmitter, and the apparatus B is a receiver. A signal in a radio wave form sent by the apparatus A may arrive at the apparatus B along multiple paths. This is known as a multipath effect. The example in FIG. 1 schematically shows that a signal sent by the apparatus A in the current environment arrives at the apparatus B through three paths: a path P1, a path P2, and a path P3. The path P1 is a line-of-sight path. The signal is reflected by a scatterer C in a process of transmission along the path P2, and the signal is reflected by a scatterer D in a process of transmission along the path P3. The scatterer (scatterer) in embodiments of the present disclosure may also be understood as a concept such as a scattering entity, a reflector, a reflecting entity, a target, or a sensing target. The signal sent by the apparatus A to the apparatus B in this embodiment of the present disclosure may be, for example, a reference signal.

In a wireless communication scenario, higher energy or power of a signal received by a receiver indicates higher communication efficiency. A transmission path with strongest signal energy or power is usually a direct path, where the direct path may also be referred to as a line-of-sight (line-of-sight, LoS) path. For example, in the example in FIG. 1, no sensing target is present on the transmission path P1. Therefore, the signal on the transmission path is applicable to wireless communication, but is not applicable to wireless sensing.

In a wireless sensing scenario, wireless sensing aims to determine whether a sensing target is present and determine related information of the sensing target. In the example in FIG. 1, the sensing target is a scatterer. Therefore, the transmission path P2 on which the signal is reflected by the scatterer C and the transmission path P3 on which the signal is reflected by the scatterer D are better signal transmission paths in the wireless sensing scenario.

In an actual wireless sensing scenario, multiple sensing targets may be present. Therefore, the sensing targets need to be distinguished in different dimensions. For example, in a time dimension, if a receiver detects that a signal has two arrival moments, it may be considered that two objects are present in the environment, and the signal is reflected by the two objects and arrives at the receiver through two different paths. Because lengths of the two paths are different, the arrival moments are also different. However, when the lengths of the two paths are too close, the difference between the arrival moments is very small, making it difficult for the receiver to distinguish between the two arrival moments in terms of time. Generally, a capability of distinguishing multiple targets in terms of time depends on a signal detection algorithm and a signal transmission bandwidth. Typically, a larger bandwidth indicates a stronger capability of distinguishing multiple targets.

To improve a capability of distinguishing multiple sensing targets in a wireless sensing scenario, sensing in a millimeter-wave frequency band may be considered. The millimeter-wave frequency band is generally considered as an electromagnetic wave band whose frequency range is from 30 GHz to 300 GHz. Compared with a conventional sub-6 GHz frequency band, a millimeter wave offers wider spectrum resources, and the millimeter wave has a short wavelength, enabling a smaller antenna size and facilitating multi-antenna integration. However, compared with a conventional sub-6 GHz frequency band, a millimeter-wave band suffers from significant channel attenuation. An apparatus performing wireless sensing in the millimeter-wave band may, for example, employ beamforming or another technology to concentrate signal energy in a specific direction, that is, a specific beam direction, to improve an equivalent channel gain of a transmitter-sensing target-receiver link, thereby improving a signal-to-noise ratio of a signal scattered by a scatterer and received by the receiver, and improving wireless sensing accuracy and performance. For example, in FIG. 1, if the apparatus A steers the transmit beam toward the P1 direction, and the apparatus B also steers the receive beam toward the P1 direction, quality of a communication link between the apparatus A and the apparatus B can be improved. If the apparatus A steers the transmit beam toward the P2 direction, and the apparatus B also steers the receive beam toward the P2 direction, signal-to-noise ratios of the apparatus A and the apparatus B for sensing the scatterer C can be improved. If the apparatus A steers the transmit beam toward the P3 direction, and the apparatus B also steers the receive beam toward the P3 direction, signal-to-noise ratios of the apparatus A and the apparatus B for sensing the scatterer D can be improved.

When a beamforming technology is employed to implement signal transmission in a specific beam direction, a weight on each antenna element may be generally adjusted based on a specific antenna array layout and a beam pattern to be implemented. The weight may include an amplitude and a phase. However, to reduce costs and implementation complexity, the weight may be constrained to a complex value with a constant modulus (for example, 1), that is, only phase adjustment is performed. This approach may be understood as designing a filter in spatial domain, to focus signal energy in a specific angular direction. Therefore, a beam may also be generally understood as a spatial (or space, spatial) filter, a spatial filter parameter, a spatial parameter, or the like. Further, a transmit beam may correspondingly be a transmit spatial filter, a transmit spatial filter parameter, a transmit spatial parameter, or the like, and a receive beam may correspondingly be a receive spatial filter, a receive spatial filter parameter, a receive spatial parameter, or the like.

In a communication scenario, because a receive end and a transmit end may not know a position and a direction of each other in advance, in an example, beam alignment may be implemented through beam training, so as to improve subsequent communication performance. Typically, in a wireless sensing scenario, a receive end and a transmit end do not know a position of a to-be-sensed target in advance. Therefore, in an example, beam alignment with the sensing target may also be implemented through beam training, so as to improve subsequent sensing performance.

In addition, in a communication scenario, a receive beam is generally determined by a receiver autonomously. For example, a transmitter may indicate a transmit beam (for example, indicate an identifier of a reference signal) to the receiver, and the receiver may autonomously determine a receive beam based on a historical beam training result regarding the beam. However, in a sensing scenario, different receive beams may face different to-be-sensed targets. Therefore, a receive beam used by a receiver may not match a direction corresponding to a target that a transmitter wants to sense.

It should be noted that the communication method in embodiments of the present disclosure may implement wireless sensing, and the communication method in embodiments of the present disclosure may be further understood as, for example, a wireless sensing method or an integrated sensing and communication method.

FIG. 2A to FIG. 2C schematically show diagrams of system architectures of a communication method, a wireless sensing method, and an integrated sensing and communication method according to embodiments of the present disclosure, and may be understood as diagrams of a communication system, a wireless sensing system, and an integrated sensing and communication method according to embodiments of the present disclosure. It should be noted that FIG. 2A to FIG. 2B are merely examples of system architectures to which the communication method in embodiments of the present disclosure may be applied, to help a person skilled in the art understand technical content of the present disclosure. However, this does not mean that embodiments of the present disclosure cannot be applied to another device, system, environment, or scenario.

FIG. 2A schematically shows a diagram of a system architecture of a communication method according to an embodiment of the present disclosure.

As shown in FIG. 2A, a system architecture of a communication method according to an embodiment of the present disclosure may include a first apparatus 201, a second apparatus 202, and a third apparatus 203.

For example, either the first apparatus or the second apparatus may be, for example, a base station or a user equipment, and the third apparatus may be, for example, one of a base station, a user equipment or a core network device. For example, the first apparatus may be a user equipment, the second apparatus may be a base station, and the third apparatus may be a core network device. For another example, the first apparatus may be a user equipment, the second apparatus may be another user equipment, and the third apparatus may be a base station or another user equipment. For another example, the first apparatus may be a base station, the second apparatus may be a user equipment, and the third apparatus may be a core network device. For another example, the first apparatus may be a base station, the second apparatus may be another base station, and the third apparatus may be a core network device.

In terms of a logic function, the base station may be understood as a scheduling entity (scheduling entity), and the terminal may be understood as a subordinate entity (subordinate entity). The scheduling entity is responsible for scheduling and controlling the service data transmission, and the subordinate entity performs the service data transmission under control of the scheduling entity.

In terms of a physical form, the base station may include but is not limited to a macro base station (macro base station), a micro base station (micro base station), a transmission reception point (transmission reception point, TRP), a baseband unit (baseband unit, BBU), and a remote radio unit (remote radio unit). The micro base station is also occasionally referred to as a small cell (small cell).

The user equipment may include but is not limited to a mobile phone, a tablet computer (tablet computer), a laptop computer (laptop computer), a wearable device (a smart watch, a smart band, a smart helmet, smart glasses, or the like), and other communication devices having a wireless access capability, such as various Internet of Things devices, including smart home devices (such as smart meters and smart appliances), smart vehicles, and the like.

The core network device undertakes tasks such as user data transmission, signaling transfer, and access control. Functions of the core network device include a mobile switching center, a service support system, a data storage and management system, an IP (internet protocol, Internet Protocol) packet data network element, a mobile Internet gateway, and the like, and are used to support requirements such as user calls, data transmission, and service processing. The core network device includes, for example, a router, a switch, and a server.

In the example in FIG. 2A, the communication system in this embodiment of the present disclosure includes the first apparatus 201, the second apparatus 202, and the third apparatus 203.

FIG. 2B schematically shows a diagram of another system architecture of a communication method according to an embodiment of the present disclosure.

Different from the system architecture shown in FIG. 2A, the system architecture shown in FIG. 2B includes a first apparatus 201 and a second apparatus 202. In other words, in the example in FIG. 2B, the communication system in this embodiment of the present disclosure includes the first apparatus 201 and the second apparatus 202.

For example, either the first apparatus 201 or the second apparatus 202 may be a base station (base station, BS) or a user equipment (user equipment, UE). For example, the first apparatus may be a user equipment, and the second apparatus may be a base station. For another example, the first apparatus may be a user equipment, and the second apparatus may be another user equipment. For another example, the first apparatus may be a base station, and the second apparatus may be a user equipment. For another example, the first apparatus may be a base station, and the second apparatus may be another base station.

In the example in FIG. 2B, the first apparatus may additionally include a function of the third apparatus in FIG. 2A, or the second apparatus may additionally include a function of the third apparatus in FIG. 2A. Specific functions of the third apparatus are described in detail in a subsequent embodiment. It may also be understood that the third apparatus and the first apparatus are a same apparatus, or the third apparatus and the second apparatus are a same apparatus.

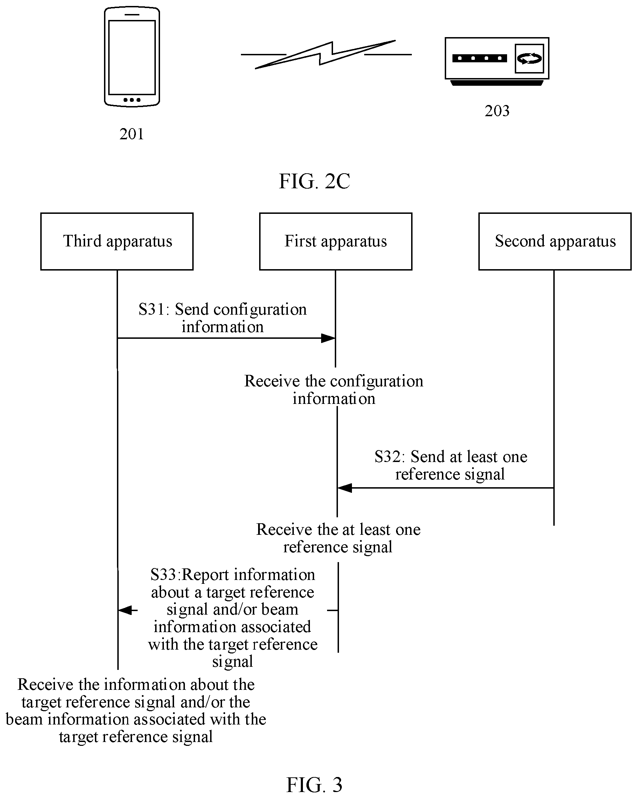

FIG. 2C schematically shows a diagram of still another system architecture of a communication method according to an embodiment of the present disclosure.

Different from the system architecture shown in FIG. 2A or FIG. 2B, the system architecture shown in FIG. 2C includes a first apparatus 201 and a third apparatus 203. In other words, in the example in FIG. 2C, the communication system in this embodiment of the present disclosure includes the first apparatus 201 and the third apparatus 203.

For example, either the first apparatus 201 or the third apparatus 203 may be, for example, a base station, a user equipment, or a core network device. For example, the first apparatus 201 may be a user equipment, and the third apparatus 203 may be a core network device. For another example, the first apparatus 201 may be a user equipment, and the third apparatus 203 may be a base station or another user equipment. For another example, the first apparatus 201 may be a base station, and the third apparatus 203 may be a core network device. For another example, the first apparatus 201 may be a base station, and the third apparatus 203 may be a core network device.

For example, the first apparatus may additionally include a function of the second apparatus, or the third apparatus may additionally include a function of the second apparatus. Specific functions of the second apparatus are described in detail in a subsequent embodiment. It may also be understood that the second apparatus and the first apparatus are a same apparatus, or the second apparatus and the third apparatus are a same apparatus.

It should be noted that the first apparatus, the second apparatus, and the third apparatus may be understood as communication apparatuses, wireless sensing apparatuses, or integrated sensing and communication apparatuses. In addition, the first apparatus, the second apparatus, and the third apparatus may all be in a physical form or a virtual form. The physical form may refer to, for example, an independent physical device or a radio frequency transceiver chip of an independent physical device. The virtual form may refer to, for example, a computer program that may implement a corresponding operation.

FIG. 3 schematically shows an interaction diagram of a communication method according to an embodiment of the present disclosure based on the foregoing system architecture. The following describes in detail operations performed by the first apparatus, the third apparatus, and the second apparatus with reference to FIG. 3.

As shown in FIG. 3, the communication method performed by the communication system according to this embodiment of the present disclosure may include, for example, operations S31 to S33.

In the operation S31, the third apparatus sends configuration information to the first apparatus.

In this operation, the first apparatus may receive the configuration information from the third apparatus.

For example, the configuration information may include, for example, configuration information of one or more reference signal resources.

The reference signal resource is a resource for sending a reference signal and/or receiving a reference signal, and the resource may include one or more of a time domain resource, a frequency domain resource, and a code domain resource. Therefore, the configuration information of the reference signal resource may include configuration information of one or more of the time domain resource, the frequency domain resource, and the code domain resource. Generally, one reference signal and one reference signal resource are associated with each other. Therefore, the configuration information of the one or more reference signal resources may also be understood as configuration information of one or more reference signals. In this specification, the two concepts "reference signal resource" and "reference signal" may be replaced with each other in some scenarios. For example, "being associated with a reference signal resource x" may be understood as or replaced with "being associated with a reference signal x", "indication information of a reference signal resource x" may be understood as "indication information of a reference signal x", and "information about a reference signal resource x" may be understood as "information about a reference signal x".

Any reference signal resource may be a periodic reference signal resource or a reference signal resource that includes multiple time units (for example, a time unit may be a symbol) in a time dimension. After receiving a periodic reference signal, the first apparatus may determine information such as a Doppler frequency corresponding to a scatterer in a sensed environment. In addition, the periodic reference signal resource or the reference signal resource that includes multiple time units in a time dimension may be further split into multiple reference signal resources. In this case, the split reference signal resources may be equivalently associated as a group or a set. Subsequently, after receiving a reference signal, the first apparatus may determine information such as a Doppler frequency corresponding to the reference signal resource. In other words, the configuration information of the reference signal resource may be used to configure multiple reference signal resources, and the multiple reference signal resources may equivalently constitute one or more periodic reference signal resources in embodiments of this application. Alternatively, any reference signal resource may be an aperiodic reference signal resource or include only one time unit in a time dimension.

For example, the configuration information of the reference signal resource may further include, for example, information about at least one transmit beam and/or information about at least one receive beam. Each of the at least one reference signal is associated with one of the at least one transmit beam, and/or each of the at least one reference signal is associated with one of the at least one receive beam. Beam information may specifically include one or more of the following: a beam identifier, a beam direction, a beam width, and the like. For example, the third apparatus may configure one or more beams (which may be a transmit beam or may be a receive beam) in advance, where configuration information of each beam may include an identifier of the beam, a direction of the beam (which may include a horizontal direction and a vertical direction), and a width of the beam (for example, a beam width at which the beam is attenuated by 3 dB relative to the beam direction, where the width may include a width in a horizontal direction and a width in a vertical direction). Then, association between a reference signal resource and a previously configured beam is indicated (for example, association between the reference signal resource and an identifier of a beam is indicated). Alternatively, association between a reference signal resource and a beam may be directly configured, that is, information such as a direction or a beam width of the beam associated with the reference signal resource is directly indicated. In the foregoing method, configuration of a beam may be further extended to configuration of a beam pair. For example, one or more beam pairs are configured in advance, each beam pair includes one transmit beam or one receive beam, and configuration information of each beam pair may include an identifier of the beam pair, information about the transmit beam (an identifier, a direction, or a width of the transmit beam), and information about the receive beam (an identifier, a direction, or a width of the receive beam). Then, association between a reference signal resource and a previously configured beam pair is indicated (for example, association between the reference signal resource and an identifier of a beam pair is indicated). Alternatively, association between a reference signal resource and a beam pair may be directly configured, that is, information such as a direction or a beam width of a transmit beam and a receive beam of the beam pair associated with the reference signal resource is directly indicated. In addition, beam information may also be configured by using a beam association relationship between reference signal resources. For example, a transmit beam spatial association relationship between a reference signal resource A and a reference signal resource B may be configured by using the configuration information. In this case, it may be determined that the second apparatus uses a same beam or similar beams for sending the reference signal resource A and the reference signal resource B. For another example, a receive beam spatial association relationship between a reference signal resource A and a reference signal resource B may be configured by using the configuration information. In this case, it may be determined that the first apparatus uses a same beam or similar beams for receiving the reference signal resource A and the reference signal resource B. For another example, a receive beam spatial association relationship and a transmit beam spatial association relationship between a reference signal resource A and a reference signal resource B may be configured by using the configuration information. In this case, it may be determined that the second apparatus uses a same beam or similar beams for sending the reference signal resource A and the reference signal resource B, and the first apparatus uses a same beam or similar beams for receiving the reference signal resource A and the reference signal resource B. For the beam association relationship between reference signal resources, refer to a quasi-co-location type D relationship in a 5G network.

It should be noted that, according to the communication method in embodiments of the present disclosure, a reference signal is associated with a beam. Being "associated" means that a corresponding reference signal may be sent in a directional and concentrated manner sent over a corresponding beam, or may be understood as that the beam is a manner of reference signal sending and receiving.

When the first apparatus and the second apparatus receive and send a reference signal over a beam, a signal-to-noise ratio or a signal-to-interference-plus-noise ratio of a measurement result for sensing a scatterer can be improved. In addition, configuring the beam information in the configuration information implements scatterer scanning and sensing in a specific direction and at a specific position performed by the first apparatus and the second apparatus.

For example, either the transmit beam or the receive beam may be in a one-to-many, many-to-one, or many-to-many association relationship with the reference signal. Specifically, different reference signals may be associated with different transmit beams or may be associated with a same transmit beam, different reference signals may be associated with different receive beams or may be associated with a same receive beam, and different reference signals may be associated with different transmit beam and receive beam pairs, or may be associated with a same transmit beam and receive beam pair.

For example, when the third apparatus and the second apparatus are different apparatuses, the third apparatus may further send, for example, configuration information of a reference signal resource to the second apparatus. The second apparatus is an apparatus that subsequently sends a reference signal on the one or more reference signal resources. That is, the third apparatus may configure one or more reference signal resources for the first apparatus and the second apparatus, for the first apparatus and the second apparatus to receive and send one or more reference signals.

For example, the configuration information may further indicate the first apparatus to report information about a reference signal that meets a first condition. Specific content of the first condition is described in detail below. Generally, when a measurement result of a reference signal meets the first condition, it may be considered that the measurement result of the reference signal includes sensing information of a scatterer or a mobile scatterer, or includes sensing information of a scatterer or a mobile scatterer with a high probability, or includes a scatterer within a specific distance range or a specific motion velocity range, or the like.

For example, the configuration information may further include at least one of the following: a first power threshold, a first amplitude threshold, a first delay range (which may also be understood as a time range), a second power threshold, a second amplitude threshold, a first Doppler frequency range (which may also be understood as a frequency range), a third power threshold, a third amplitude threshold, a first probability threshold, a second probability threshold, a similarity threshold, and a variation (which may also be understood as a difference) threshold (detailed explanations of the information included in the configuration information is also described in detail in the following). For example, the configuration information may further include at least one of the following: the first power threshold, the first amplitude threshold, the first delay range, the second power threshold, the second amplitude threshold, the first Doppler frequency range, the third power threshold, and the third amplitude threshold. For example, at least one of the first probability threshold, the second probability threshold, the similarity threshold, and the variation threshold may be indicated in another manner such as RRC (Radio Resource Control, radio resource control) signaling.

For example, the "range" limited in embodiments of the present disclosure, such as the first delay range and the first Doppler frequency range, may correspond to an open interval, a closed interval, or a half-open/half-closed interval.

For example, the configuration information may further indicate the first apparatus to report at least one of the following information to the third apparatus regarding a target reference signal: a reference signal received power (Reference Signal Receiving Power, RSRP) of the reference signal, a signal power of the reference signal, a Doppler frequency (which may be one or more frequencies) of the reference signal, a delay (which may be one or more delays) of the reference signal, receive beam information of the reference signal, a probability of scatterer presence corresponding to the reference signal, a probability of mobile scatterer presence corresponding to the reference signal, a delay spectrum or a Doppler spectrum or a delay-Doppler spectrum corresponding to the reference signal, a power and/or an amplitude of the reference signal received through a path, and one or more angles of arrival obtained by measuring the reference signal, where the target reference signal is a reference signal that meets the first condition. Optionally, if there are multiple target reference signals, the first apparatus may separately report the foregoing information for the multiple target reference signals.

It should be noted that various configurations may be performed by using the configuration information. The foregoing schematically shows examples in which the configuration information indicates multiple configurations or the configuration information includes different configuration content. For example, the third apparatus may send the configuration information to the first apparatus in a single transmission or in multiple transmissions. Optionally, there may also be multiple third apparatuses, each sending one or more items of the configuration information to the first apparatus, that is, the configuration information may be separately determined by multiple third apparatuses and then sent to the first apparatus. For example, a third apparatus a determines the configuration information of the reference signal resource and sends the configuration information to the first apparatus, and a third apparatus b determines the configuration information related to the first condition (which may include, for example, one or more of the first power threshold, the first delay range, the second power threshold, the third power threshold, the first Doppler frequency range, the first probability threshold, the second probability threshold, the similarity threshold, and the variation threshold), and sends the configuration information to the first apparatus.

It should be further noted that any piece of information included in the configuration information may be predefined or preconfigured, for example, may be predefined in a standard, or may be preconfigured in the first apparatus or a chip of the first apparatus. Therefore, the operation S31 is an optional step. For example, the configuration information may include the first power threshold, the first delay range, the second power threshold, the third power threshold, the first probability threshold, the second probability threshold, the similarity threshold, and the variation threshold. The first Doppler frequency range may be predefined or preconfigured. For another example, the configuration information may include the first power threshold, the first delay range, the second power threshold, and the third power threshold. The first Doppler frequency range, the first probability threshold, the second probability threshold, the similarity threshold, and the variation threshold may be predefined or preconfigured. In addition, when the first apparatus and the third apparatus are a same apparatus, "the third apparatus sends configuration information to the first apparatus" may be understood as internal implementation in the apparatus, or may be understood as that a specific operation does not need to be explicitly performed.

In addition, when the third apparatus and the second apparatus are a same apparatus, the operation may also be understood as that the second apparatus sends the configuration information to the first apparatus. In this operation, the first apparatus may receive the configuration information from the second apparatus, or a part of the information may be sent by the second apparatus, and a part of the information is sent by the third apparatus different from the second apparatus.

The specific configuration information may be configured by using higher layer signaling, for example, configured by using radio resource control layer signaling, or may be indicated by using physical layer signaling, where indication by using physical layer signaling may be, for example, indication by using control information. Certainly, the configuration or indication may alternatively be performed by using signaling of another layer. This is not limited in embodiments of this application.

The operation S31 may be understood as a configuration phase. For example, in a communication phase after the configuration phase, corresponding communication may be performed based on a specific configuration in the configuration phase.

The operation S32 and the operation S33 may be understood as a communication phase (or understood as a sensing phase or a communication sensing phase).

As shown in FIG. 3, in the operation S32, the second apparatus sends at least one reference signal, and the first apparatus receives the at least one reference signal.

For example, the second apparatus may determine one or more reference signal resources based on the configuration information of the reference signal resource in S31, and then send one or more reference signals on the reference signal resources. Correspondingly, the first apparatus may determine one or more reference signal resources based on the configuration information of the reference signal resource in S31, and then receive one or more reference signals on the reference signal resources.

For example, the first apparatus may directly receive the at least one reference signal. For example, the first apparatus is a user equipment, and the user equipment may directly receive the at least one reference signal. In addition, the first apparatus may indirectly receive the at least one reference signal in another manner. For example, when the first apparatus is a signal processing chip in a user equipment, the signal processing chip may receive the at least one reference signal via a radio frequency transceiver apparatus in the user equipment. To be specific, after receiving the at least one reference signal, the radio frequency transceiver apparatus in the user equipment may forward the at least one reference signal (in some cases, the reference signal may undergo specific processing steps at the radio frequency transceiver apparatus) to the signal processing chip. This may be understood as that the signal processing chip "indirectly" receives the at least one reference signal. Alternatively, the first apparatus may receive the reference signal through an external communication interface. This may also be understood as that the first apparatus "indirectly" receives the at least one reference signal.

For example, if the configuration information in S31 includes configuration information of a beam, the second apparatus may send each reference signal over a transmit beam associated with the reference signal, and the first apparatus may receive each reference signal over a receive beam associated with the reference signal.

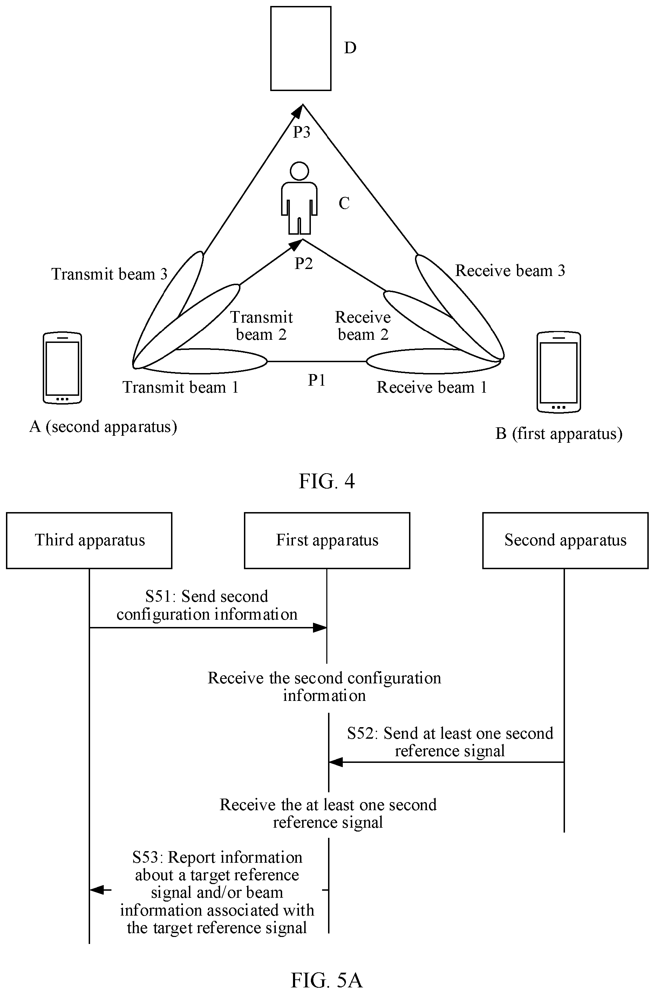

FIG. 4 schematically shows a diagram of sending a reference signal and receiving a reference signal over a transmit beam and a receive beam corresponding to FIG. 1.

In the example in FIG. 4, the first apparatus is, for example, an apparatus B, and the second apparatus is, for example, an apparatus A.

The second apparatus may send a reference signal to the first apparatus over, for example, a transmit beam. FIG. 4 schematically shows a specific example of three transmit beams in total including a transmit beam 1 to a transmit beam 3 and three receive beams in total including a receive beam 1 to a receive beam 3. For example, the configuration information of the reference signal resource in S31 includes nine reference signal resources, that is, an RS1 to an RS9. The RS1 is associated with the transmit beam 1 and the receive beam 1, the RS2 is associated with the transmit beam 1 and the receive beam 2, and the RS3 is associated with the transmit beam 1 and the receive beam 3, and so on. To be specific, each reference signal resource is associated with one of the three transmit beams and one of the three receive beams. In the following, RSx-yz is used to represent that a reference signal resource x is associated with a transmit beam y and a receive beam z. In this case, there are nine reference signal resources: RS1-11, RS2-12, RS3-13, RS4-21, RS5-22, RS6-23, RS7-31, RS8-32 and RS9-33, and transmit beams and receive beams associated with the nine reference signal resources.

With reference to the communication method in the foregoing embodiment of the present disclosure, the communication method is applied to a wireless sensing scenario. The second apparatus sends a reference signal to the first apparatus over a transmit beam, so that the reference signal is sent in a directional and concentrated manner. The first apparatus receives a reference signal over a receive beam, so that the reference signal is received in a directional and concentrated manner.

For example, in the example in FIG. 4, the reference signal resource RS1 is associated with the transmit beam 1 and the receive beam 1, and directions of both the transmit beam 1 and the receive beam 1 are steered toward the direct path P1. Therefore, a signal-to-noise ratio and a signal power of a signal received on the reference signal resource RS1 are high. However, no scatterer is present on the path P1. Therefore, the combination of the transmit beam 1 and the receive beam 1 is not applicable to wireless sensing, but is applicable to communication. The reference signal resource RS5 is associated with the transmit beam 2 and the receive beam 2, which are steered toward the transmission path P2. The scatterer C is located on the transmission path P2. Therefore, the reference signal resource RS5 (or the combination of the transmit beam 2 and the receive beam 2) is applicable to performing wireless sensing on the scatterer C. The reference signal resource RS9 is associated with the transmit beam 3 and the receive beam 3, which are steered toward the transmission path P3. The scatterer D is located on the transmission path P3. Therefore, the reference signal resource RS9 (or the combination of the transmit beam 3 and the receive beam 3) is applicable to performing wireless sensing on the scatterer D. The reference signal resource RS2 is associated with the combination of the transmit beam 1 and the receive beam 2, and directions of the transmit beam 1 and the receive beam 2 do not match, that is, the transmit beam 1 and the receive beam 2 in the combination are not steered toward a same transmission path. Therefore, a signal-to-noise ratio and a signal power of the reference signal resource RS2 received by the first apparatus B are low. Therefore, the combination of the transmit beam 1 and the receive beam 2 is not applicable to wireless sensing, and is not applicable to communication. Similarly, another beam combination (or reference signal or reference signal resource) is also not applicable to wireless sensing and communication.

In the operation S33, the first apparatus reports information about a target reference signal and/or beam information associated with the target reference signal to the third apparatus.

The target reference signal is a reference signal that meets the first condition, and one or more target reference signals may be determined.

For example, the information about the target reference signal reported by the first apparatus may include, for example, identification information of the target reference signal. As described above, a reference signal and a reference signal resource are generally associated with each other. Therefore, information about a reference signal resource on which the target reference signal is located may alternatively be reported, that is, identification information of a target reference signal resource may also be reported, where the target reference signal resource is the reference signal resource on which the target reference signal is located.

For example, the beam information associated with the target reference signal reported by the first apparatus may include information about one or more of a transmit beam, a receive beam, or a transmit-receive beam pair associated with the target reference signal. For example, the first apparatus may report one or more of an identifier of the transmit beam associated with the target reference signal, a direction of the transmit beam, a width of the transmit beam, an identifier of the receive beam, a direction of the receive beam, a width of the receive beam, and an identifier of the transmit-receive beam pair. For another example, the first apparatus may report one or more of an identifier of a reference signal resource that has a receive beam spatial association relationship with the target reference signal resource, an identifier of a reference signal resource that has a transmit beam spatial association relationship with the target reference signal resource, and an identifier of a reference signal resource that has a receive beam spatial association relationship and a transmit beam spatial association relationship with the target reference signal resource.

Alternatively, the beam information associated with the target reference signal may be used as the information about the target reference signal. To be specific, that the first apparatus reports the information about the target reference signal to the third apparatus may include that the first apparatus reports the beam information associated with the target reference signal to the third apparatus.

For example, the first apparatus may report the information about the target reference signal and the beam information associated with the target reference signal.

The first condition may include, for example, at least one of the following Condition 1 to Condition 7.

Condition 1: It is determined, based on the target reference signal, that a scatterer is present. The condition may alternatively be understood as that the target reference signal is scattered or reflected by a scatterer and then arrives at the first apparatus, or a part of power or energy of the target reference signal is scattered or reflected by a scatterer and then arrives at the first apparatus, or a scatterer is present on a transmission path of the target reference signal. For example, when the first apparatus and the second apparatus receive and send a reference signal RSᵢ (where the RSᵢ is one of the at least one reference signal sent by the second apparatus in S32) over different beams, energy and power distribution of the reference signal RSᵢ on different transmission paths may be changed. For example, when the first apparatus and the second apparatus steer beams toward a direct path, most of energy and power of the reference signal RSᵢ arrive at the first apparatus through the direct path. Therefore, the power of the reference signal RSᵢ received by the first apparatus is mainly the power of the reference signal RSᵢ transmitted to the first apparatus through the direct path. In this case, a measurement result of the RSᵢ by the first apparatus mainly includes characteristics of a direct path channel between the first apparatus and the second apparatus, and basically does not include characteristics of another scatterer. In this case, the reference signal does not meet Condition 1. For another example, when the first apparatus and the second apparatus steer beams toward a transmission path formed via scattering or reflection by a scatterer, most of energy and power of the reference signal arrive at the first apparatus through a scattered path. In this case, a measurement result of the RSᵢ by the first apparatus mainly includes characteristics of a scattered path channel between the first apparatus and the second apparatus, and the characteristics of the scattered path channel actually reflect characteristics of the scatterer. In this case, the reference signal meets Condition 1. Specifically, the first apparatus may determine, based on the measurement result of the reference signal by employing an algorithm such as presence detection, whether a scatterer is present. For example, in FIG. 4, the first apparatus can detect a scatterer when receiving the RS5 (corresponding to the path P2) and the RS9 (corresponding to the path P3). Therefore, the RS5 and the RS9 are reference signals that meet Condition 1. Specifically, the reference signal RS5 is associated with the transmit beam 2 and the receive beam 2, which are steered toward the transmission path P2. The scatterer C is located on the transmission path P2. Therefore, the reference signal RS5 (or the combination of the transmit beam 2 and the receive beam 2) is applicable to performing wireless sensing on the scatterer C. The reference signal RS9 is associated with the transmit beam 3 and the receive beam 3, which are steered toward the transmission path P3. The scatterer D is located on the transmission path P3. Therefore, the reference signal RS9 (or the combination of the transmit beam 3 and the receive beam 3) is applicable to performing wireless sensing on the scatterer D.

Condition 2: It is determined, based on the target reference signal, that a mobile scatterer is present. This may be understood as that the target reference signal is scattered or reflected by a mobile scatterer and then arrives at the first apparatus, or a part of power or energy of the target reference signal is scattered or reflected by a mobile scatterer and then arrives at the first apparatus, or a mobile scatterer is present on a transmission path of the target reference signal. For example, when the first apparatus and the second apparatus steer beams toward a transmission path formed via scattering and reflection by a mobile scatterer, most of energy and power of the reference signal arrive at the first apparatus through a scattered path. In this case, a measurement result of the RSᵢ by the first apparatus mainly includes characteristics of a scattered path channel between the first apparatus and the second apparatus, and the characteristics of the scattered path channel actually reflect characteristics of the mobile scatterer. Specifically, the first apparatus may determine, by employing an algorithm such as presence detection, whether a scatterer is present, and then calculate a Doppler frequency by detecting the measurement result of the reference signal, to determine whether the scatterer moves. For example, in FIG. 4, the first apparatus can detect a mobile scatterer when receiving the RS5 (corresponding to the path P2). Therefore, the RS5 is a reference signal that meets Condition 2. The first apparatus can detect a scatterer when receiving the RS9 (corresponding to the path P3), and the scatterer is stationary. Therefore, the RS9 is a reference signal that does not meet Condition 2.

Condition 3: It is determined, based on the target reference signal, that a probability of scatterer presence is greater than or equal to a first probability threshold. This may be understood as a probability that the target reference signal is scattered or reflected by a scatterer and then arrives at the first apparatus, or a probability that a part of power or energy of the target reference signal is scattered or reflected by a scatterer and then arrives at the first apparatus, or a probability that a scatterer is present on a transmission path of the target reference signal is greater than or equal to the first probability threshold. For example, the probability of scatterer presence may be determined by employing an algorithm such as presence detection. For example, in FIG. 4, the first apparatus can detect a scatterer and a probability of scatterer presence is greater than or equal to the first threshold when receiving the RS5 (corresponding to the path P2) and the RS9 (corresponding to the path P3). Therefore, the RS5 and the RS9 are reference signals that meet Condition 3.

Condition 4: It is determined, based on the target reference signal, that a probability of mobile scatterer presence is greater than or equal to a second probability threshold. This may be understood as a probability that the target reference signal is scattered or reflected by a mobile scatterer and then arrives at the first apparatus, or a probability that a part of power or energy of the target reference signal is scattered or reflected by a mobile scatterer and then arrives at the first apparatus, or a probability that a mobile scatterer is present on a transmission path of the target reference signal is greater than or equal to the first probability threshold. For example, a probability of scatterer presence may be determined by employing an algorithm such as presence detection, and then a Doppler frequency is calculated based on the measurement result of the reference signal, to determine whether the scatterer moves. For example, in FIG. 4, the first apparatus can detect a mobile scatterer when receiving the RS5 (corresponding to the path P2). Therefore, the RS5 is a reference signal that meets Condition 4.

Condition 5: A first signal power obtained by measuring the target reference signal is greater than or equal to a first power threshold, where the first signal power is a signal power within a first delay range, or a first signal amplitude (or an amplitude sum) obtained by measuring the target reference signal is greater than or equal to a first amplitude threshold, where the first signal amplitude (or the amplitude sum) is an amplitude (or an amplitude sum) within a first delay range. Generally, since the signal power can be determined by squaring the signal amplitude, conversion between the signal power and the signal amplitude is straightforward. The following mainly uses the power as an example for description.

With reference to the diagram of FIG. 1, due to a multipath effect, when multiple paths are present in a transmission environment, a reference signal RSᵢ may be transmitted from the second apparatus to the first apparatus through multiple paths. These paths include, for example, a direct path and a transmission path formed via scattering or reflection by a scatterer, and different transmission paths have different delays and gain coefficients. Generally, the direct path has a small delay and a large gain coefficient, and the transmission path formed via scattering or reflection by a scatterer has a large delay and a small gain coefficient. After receiving the reference signal RSᵢ, the first apparatus processes the measurement result of the reference signal to obtain a delay power spectrum. The delay power spectrum may reflect delay distribution of different transmission paths and power distribution (positively correlated to an absolute value of an amplitude) corresponding to each delay. In addition, when the second apparatus and the first apparatus receive and send the reference signal RSᵢ over different beams, energy and power distribution of the reference signal RSᵢ on different transmission paths may be changed. For example, when the beams are steered toward a direct path, most of energy and power of the reference signal RSᵢ arrive at the first apparatus through the direct path. Therefore, the power of the reference signal RSᵢ received by the first apparatus is mainly the power of the reference signal RSᵢ transmitted to the first apparatus with a delay corresponding to the direct path (or a delay close to the delay of the direct path). In other words, if the first apparatus can distinguish multiple paths based on the measurement result of the reference signal, energy or power of the reference signal received through the direct path is high. For another example, when the beams are steered toward a transmission path formed via scattering or reflection by a scatterer, most of energy and power of the reference signal arrives at the first apparatus through a scattered path. Therefore, the power of the reference signal RSᵢ received by the first apparatus is mainly the power of the reference signal RSᵢ transmitted to the first apparatus with a delay of the scattered path (or a delay close to the delay of the scattered path). In other words, if the first apparatus can distinguish multiple paths based on the measurement result of the reference signal RSᵢ, power or energy of the reference signal RSᵢ received through the scattered path is high. A transmission delay of each path corresponds to a sum of a distance between an associated scatterer and the first apparatus and a distance between the associated scatterer and the second apparatus. Therefore, if only a scatterer within a specific distance range is to be sensed, after the reference signal RSᵢ is received and sent over a specific beam, the first apparatus may measure a signal power within a specific delay range (corresponding to the first delay range). If the signal power within the delay range is high (for example, a high signal power is embodied as being greater than or equal to the first power threshold), it demonstrates that a large portion of the power of the reference signal RSᵢ arrives at the first apparatus via one or more scatterers, and the one or more scatterers are within the specific distance range.

Optionally, when the first power threshold is not configured or is not preconfigured, the condition may also be converted into: identifying, by measuring the target reference signal, a path whose delay falls within the first delay range.

Condition 6: A second signal power obtained by measuring the target reference signal is greater than or equal to a second power threshold, where the second signal power is a signal power within a first Doppler frequency range, or a second signal amplitude (or an amplitude sum) obtained by measuring the target reference signal is greater than or equal to a second amplitude threshold, where the second signal amplitude (or the amplitude sum) is an amplitude (or an amplitude sum) within a first Doppler frequency range. Generally, since the signal power can be determined by squaring the signal amplitude, conversion between the signal power and the signal amplitude is straightforward. The following mainly uses the power as an example for description.

With reference to the diagram of FIG. 1, due to a multipath effect, when multiple paths are present in a transmission environment, a reference signal RSᵢ may be transmitted from the second apparatus to the first apparatus through multiple paths. These paths include, for example, a direct path and a transmission path formed via scattering or reflection by a scatterer, and different transmission paths have different Doppler frequencies and gain coefficients. After receiving the reference signal RSᵢ, the first apparatus processes the measurement result of the reference signal RSᵢ to obtain a Doppler power spectrum. The Doppler power spectrum may reflect Doppler frequency distribution of different transmission paths and power distribution (positively correlated to an absolute value of a gain coefficient) corresponding to each Doppler frequency. In addition, when the second apparatus and the first apparatus receive and send the reference signal RSᵢ over different beams, energy and power distribution of the reference signal RSᵢ on different transmission paths may be changed. For example, when the beams are steered toward a direct path, most of energy and power of the reference signal RSᵢ arrive at the first apparatus through the direct path. Therefore, a Doppler frequency determined after the first apparatus receives the reference signal RSᵢ is mainly related to characteristics of the direct path. When both the first apparatus and the second apparatus are stationary and there is no carrier frequency offset between the two apparatuses, a dominant Doppler frequency corresponding to the direct path is zero. For another example, when the beams are steered toward a transmission path formed via scattering or reflection by a scatterer, most of energy and power of the reference signal RSᵢ arrive at the first apparatus through a scattered path. Therefore, a Doppler frequency determined after the first apparatus receives the reference signal RSᵢ is mainly related to characteristics of the scattered path. When both the first apparatus and the second apparatus are stationary and there is no carrier frequency offset between the two apparatuses, a dominant Doppler frequency corresponding to the scattered path is mainly related to a motion velocity (including a speed and a direction) or a frequency (for example, a human respiratory rate) of the scatterer. Therefore, in this case, if only a scatterer within a specific motion velocity range or a specific motion frequency range (for example, whether a person is present is determined through breath detection) is to be sensed, after the reference signal RSᵢ is sent and received over a specific beam, the first apparatus may measure a signal power within a specific Doppler frequency range (corresponding to the first Doppler frequency range). If the signal power within the Doppler frequency range is high (for example, a high signal power is embodied as being greater than or equal to the second power threshold), it demonstrates that a large portion of the power of the reference signal RSᵢ arrives at the first apparatus via one or more scatterers, and the one or more scatterers are within the specific motion velocity range or the motion frequency range.

Optionally, when the second power threshold is not configured or is not preconfigured, the condition may also be converted into: identifying, by measuring the target reference signal, a path whose Doppler frequency falls within the first Doppler frequency range.

Condition 7: A third signal power obtained by measuring the target reference signal is greater than or equal to a third power threshold, where the third signal power is a signal power within the first Doppler frequency range and the first delay range, or a third signal amplitude (or an amplitude sum) obtained by measuring the target reference signal is greater than or equal to a third amplitude threshold, where the third signal amplitude (or the amplitude sum) is an amplitude (or an amplitude sum) within the first Doppler frequency range and a delay range. Generally, since the signal power can be determined by squaring the signal amplitude, conversion between the signal power and the signal amplitude is straightforward. The following mainly uses the power as an example for description.

Optionally, when the third power threshold is not configured or is not preconfigured, the condition may also be converted into: identifying, by measuring the target reference signal, a path whose Doppler frequency falls within the first Doppler frequency range and whose delay falls within the first delay range.

It should be noted that the first condition may include any one of the foregoing seven conditions. Therefore, after receiving the configuration information, the first apparatus may substitute any received RSᵢ into at least one of Condition 1 to Condition 7 included in the first condition, to determine whether the reference signal RSᵢ meets the first condition. When a reference signal RSᵢ meets the first condition, information about the reference signal RSᵢ is reported.

The first condition may include only one condition or include multiple conditions in the foregoing seven conditions.

For example, the first condition may include, for example, Condition 1 and Condition 3 in the foregoing seven conditions. Presence of a scatterer can be determined according to Condition 1, and accuracy of determining a scatterer can be improved according to Condition 3. In combination with Condition 1 and Condition 3, information about a target reference signal applicable to wireless sensing among at least one reference signal can be accurately reported.

For another example, the first condition may include, for example, Condition 1, Condition 3, and Condition 5 in the foregoing seven conditions. Presence of a scatterer can be determined according to Condition 1, accuracy of a scatterer can be improved based on a first probability threshold according to Condition 3, and presence of a scatterer on a transmission path of a target reference signal can be determined in a delay dimension according to Condition 5.

For another example, the first condition may include, for example, Condition 2 and Condition 4 in the foregoing seven conditions. Presence of a mobile scatterer can be determined according to Condition 2, and accuracy of determining a mobile scatterer can be improved according to Condition 4.

For another example, the first condition may include, for example, Condition 2, Condition 4, and Condition 6 in the foregoing seven conditions. Presence of a mobile scatterer can be determined according to Condition 2, and accuracy of determining a mobile scatterer can be improved according to Condition 4. Presence of a mobile scatterer on a transmission path of a target reference signal can be determined in a Doppler frequency dimension according to Condition 6.

For example, the first signal power may be, for example, calculated according to the following Formula (1) or Formula (2): ${A}_{1} {\int }_{D ∈ Γ} {\left|{\sum }_{k} {H}_{k} exp \left(j2πD\frac{k}{{N}_{1}}\right)\right|}^{2} ,$ (1) ${A}_{1} {\sum }_{D ∈ Γ} {\left|{\sum }_{k} {H}_{k} exp \left(j2πD\frac{k}{{N}_{1}}\right)\right|}^{2} ,$ (2)

*Γ* represents the first delay range, *Hₖ* represents a channel response coefficient, on a frequency domain unit (for example, a subcarrier) *k*, determined based on the measurement result of the target reference signal, for example, *Hₖ* is an effective channel response coefficient measured on the frequency domain unit *k* included in the target reference signal resource, or an effective channel response coefficient measured on the frequency domain unit *k* included in the target reference signal resource without receiver noise, or an effective channel response coefficient measured and estimated on the frequency domain unit *k* included in the target reference signal resource and another resource, or an effective channel response coefficient measured and estimated on the frequency domain unit *k* included in the target reference signal resource and another resource without receiver noise, D represents a delay within the first delay range, and *N*₁ may be determined based on a bandwidth of the target reference signal resource. For example, the target reference signal resource presents uniform distribution in frequency domain, one frequency domain unit is occupied every Z frequency domain units, and X frequency domain units are occupied in total. In this case, N₁ may be equal to ZX or Z(X-1), or *N*₁ is a quantity of points of inverse discrete Fourier transform IDFT (for example, a quantity of points of inverse fast Fourier transform IFFT). *A*₁ is a constant, for example, *A*₁ = 1 . ∑_{*D*∈*Γ*}(·) represents performing summation on · corresponding to each delay D in *Γ*, ∫*_{D∈Γ}*(·) represents performing integration on · corresponding to each delay D in *Γ*, ∑*ₖ*(·) represents performing summation on · corresponding to each frequency domain unit *k*, exp represents an exponential function with a natural constant e as a base, and *j* is an imaginary unit and may be defined as $\sqrt{- 1}$.

For example, the first delay range *Γ* is a delay range normalized by 1/*B*, and *D* is a delay normalized by 1/*B*. For example, if an actual delay range is *T*₁ to *T*₂, the first delay range *Γ* may indicate *D*₁ to *D*₂, where *D*₁=T₁×*B*, and *D*₂=T₂×*B*. *B* represents a bandwidth of the target signal, for example, *B=N*₁×*f_{scs}*, where *f_{scs}* represents a size of a frequency domain unit and may be a bandwidth of a subcarrier. If the first delay range *Γ* is an actual delay range, the foregoing Formula (1) and Formula (2) may also be respectively adjusted to the following Formula (3) and Formula (4): ${A}_{1} {\int }_{D ∈ Γ} {\left|{\sum }_{k} {H}_{k} exp \left(j2{πf}_{k}D\right)\right|}^{2} ,$ (3) ${A}_{1} {\sum }_{D ∈ Γ} {\left|{\sum }_{k} {H}_{k} exp \left(j2{πf}_{k}D\right)\right|}^{2} ,$ (4)

*fₖ* represents a frequency of the frequency domain unit *k*, which may be an actual frequency of the frequency domain unit *k* in radio frequency, or may be a frequency of the frequency domain unit *k* in a baseband, or may be a start frequency, a center frequency, or an end frequency of the frequency domain unit *k*.

For example, *fₖ* = *kf_{scs}* or *fₖ* = *f_{c}* + *kf_{scs},* where *f_{c}* is a carrier frequency.

For example, the first delay range may be, for example, a delay range indicating an absolute delay or a delay range indicating a relative delay.

When the first delay range represents an absolute delay, the first delay range corresponds, for example, to an absolute transmission delay of a reference signal transmitted from the second apparatus to the first apparatus. In this case, values in the first delay range are all values greater than or equal to 0. When the first delay range represents a relative delay, the first delay range corresponds to a difference between a moment at which a reference signal is transmitted from the second apparatus to the first apparatus and a time reference point. The time reference point may include, for example, a time point at which the first apparatus receives a reference signal through a direct path or a first arriving path, which may be, for example, a start position of reception or an end position of reception of the first apparatus on a time unit where the target reference signal resource is located.

In an orthogonal frequency division multiplexing (orthogonal frequency division multiplexing, OFDM) system, a reference signal is usually carried on an OFDM symbol, and the time reference point may further include, for example, a start position or an end position of the OFDM symbol. For example, the first apparatus, the second apparatus, and the third apparatus may determine and configure the time reference point through measurement in advance.

For example, the first delay range *Γ* may represent continuous delay values in the range, or may be several discrete values in the range. For example, when the first delay range is represented as *D*₁ to *D*₂, the first delay range may include all delays in *D*₁ to *D*₂, or may include only some discrete values in *D*₁ to *D*₂. For example, in a normalized delay representation method, the first delay range may include integer values in *D*₁ to *D*₂, and in a non-normalized delay representation method, the first delay range may include a delay value that is a multiple of 1/*B* in *D*₁ to *D*₂.

For example, the first signal power may be determined based on a power of a path with a highest power among multiple target paths, the multiple target paths are multiple paths determined based on the target reference signal, and a delay of each of the multiple target paths falls within the first delay range.

A power of a path whose delay is *Dₚ* (*Dₚ* is within the first delay range) is determined according to the following Formula (5): ${A}_{1} {\left|{\sum }_{k} {H}_{k} exp \left(j2{πD}_{p}\frac{k}{{N}_{1}}\right)\right|}^{2} ,$ (5)

When *Dₚ* is an unnormalized delay, the foregoing Formula (5) may be replaced with the following Formula (6): ${A}_{1} {\left|{\sum }_{k} {H}_{k} exp \left(j2{πf}_{k}{D}_{p}\right)\right|}^{2}$ (6)

For details about related parameters in the formula, refer to the foregoing explanations. It should be noted that, when the first signal power is calculated according to Formula (5) or (6), Condition 5 may also be understood as follows: Among multiple paths determined based on the target reference signal, a delay of a path falls within the first delay range, and a power at which the signal is transmitted to the first apparatus through the path is greater than or equal to the first power threshold.

It should be noted that when the first amplitude threshold is configured in Condition 5, the foregoing formula may be correspondingly converted into amplitude calculation, and simply |.|² in the foregoing formula needs to be replaced with |.|.

The first delay range may include only one continuous interval, or may include multiple discontinuous intervals. For example, when a scatterer in multiple distance ranges needs to be sensed, the first delay range may be configured to include multiple discontinuous intervals. The intervals mentioned herein may be an open interval, a closed interval, or a half-open and half-closed interval. This is not limited herein.

When the target reference signal resource occupies multiple time units, operations such as filtering, combining, and averaging on measurement results on the multiple time units may be further performed for the first signal power.

For example, the second signal power may be, for example, calculated according to the following Formula (7) or Formula (8): ${A}_{2} {\int }_{f ∈ Λ} {\left|{\sum }_{i} {H}_{i} exp \left(-j2{πfT}_{i}\right)\right|}^{2} ,$ (7) ${A}_{2} {\sum }_{f ∈ Λ} {\left|{\sum }_{i} {H}_{i} exp \left(-j2{πfT}_{i}\right)\right|}^{2}$ (8)

*Λ* represents the first Doppler frequency range, *Hᵢ* represents a channel response coefficient, on a time unit (for example, an OFDM symbol) *i*, determined based on the measurement result of the target reference signal, for example, *Hᵢ* is an effective channel response coefficient measured on the time unit *i* included in the target reference signal resource, or an effective channel response coefficient measured on the time unit *i* included in the target reference signal resource without receiver noise, or an effective channel response coefficient measured and estimated on the time unit *i* included in the target reference signal resource and another resource, or an effective channel response coefficient measured and estimated on the time unit *i* included in the target reference signal resource and another resource without receiver noise. For example, *Hᵢ* may be a channel response coefficient on a same frequency unit on the foregoing different time units. For a manner of determining a frequency domain unit, refer to related descriptions in Formulas (1) and (2). *f* represents a Doppler frequency in the first Doppler frequency range, *Tᵢ* represents a moment corresponding to the time unit i (the time unit i may be a start position of reception, an end position of reception, or a middle position between the start position of reception and the end position of reception that correspond to reception of the target reference signal resource by the first apparatus), and *Tᵢ* may be a time relative to a time reference point, for example, may be a time relative to a start moment of the most recent frame numbered 0, or may be a time unit occupied by the target reference signal resource. *A*₂ is a constant, for example, *A*₂ = 1. ∑*_{f∈Λ}*(·) represents performing summation on · corresponding to each Doppler frequency f in *Λ*, ∫*_{f∈Λ}*(·) represents performing integration on · corresponding to each Doppler frequency *f* in *Λ*, ∑*ᵢ*(·) represents performing summation on · corresponding to each time unit i, exp represents an exponential function with a natural constant e as a base, and *j* is an imaginary unit and may be defined as $\sqrt{- 1}$.

For example, when the target reference signal resource presents uniform distribution (or understood as equally spaced distribution) in terms of time, the Doppler frequency range and the Doppler frequency may also be represented in a normalized form. When the target reference signal resource occupies one time unit every V time units, Y time units are used to calculate a Doppler frequency, and a length of each time unit is Tₛ, the Doppler frequency range may be normalized according to 1/(VYTₛ). For example, a normalized Doppler frequency range is represented as F₁ to F₂, and an actual Doppler frequency corresponding to the normalized Doppler frequency range is F1/(VYT_{S}) to F2/(VYT_{S}). In this case, the second signal power may also be determined according to the following formulas, that is, the foregoing Formula (7) and Formula (8) may also be adjusted to the following Formula (9) and Formula (10) respectively: ${A}_{2} {{\int }_{f ∈ Λ} \left|{\sum }_{i} {H}_{i} exp \left(-j2πf\frac{i}{{N}_{2}}\right)\right|}^{2}$ (9) ${A}_{2} {\sum }_{f ∈ Λ} {\left|{\sum }_{i} {H}_{i} exp \left(-j2πf\frac{i}{{N}_{2}}\right)\right|}^{2}$ (10)

N₂ may be determined by calculating window duration of a Doppler frequency, for example, N₂=VY or V(Y-1).

Optionally, the configuration information in S31 may further indicate which time units occupied by the target time unit are to be used for calculating the second signal power. For example, the configuration information may indicate that Y nearest time units occupied by a nearest target reference signal resource are to be used for calculating the second signal power. Alternatively, the information may be preconfigured or predefined.

For example, the second signal power is determined based on a power of a path with a highest power among multiple target paths, the multiple target paths are multiple paths determined based on the target reference signal, and a Doppler frequency of each of the multiple target paths falls within the first Doppler frequency range.

A power of a path whose Doppler frequency is *f* is determined according to the following Formula (11): ${A}_{2} {\left|{\sum }_{i} {H}_{i} exp \left(-j2{πfT}_{i}\right)\right|}^{2}$ (11)

When *f* is a normalized Doppler frequency, the foregoing Formula (11) may be replaced with the following Formula (12): ${A}_{2} {\left|{\sum }_{i} {H}_{i} exp \left(-j2πf\frac{i}{{N}_{2}}\right)\right|}^{2}$ (12)

For details about related parameters in the formula, refer to the foregoing explanations. It should be noted that, when the second signal power is calculated according to Formula (11) or (12), Condition 6 may also be understood as follows: Among multiple paths determined based on the target reference signal, a Doppler frequency of a path falls within the first Doppler frequency range, and a power at which the signal is transmitted to the first apparatus through the path is greater than or equal to the second power threshold.

It should be noted that when the second amplitude threshold is configured in Condition 6, the foregoing formula may be correspondingly converted into amplitude calculation, and simply |.|² in the foregoing formula needs to be replaced with |.|.

The first Doppler frequency range may include only one continuous interval, or may include multiple discontinuous intervals. For example, when scatterers in multiple velocity ranges are to be sensed, the first Doppler frequency range may be configured to include multiple discontinuous intervals. The interval mentioned herein may be an open interval, a closed interval, or a half-open/half-closed interval. This is not limited herein.

When the target reference signal resource occupies multiple frequency units, operations such as filtering, combining, and averaging on measurement results on the multiple frequency units may be further performed for the second signal power.

For example, the first Doppler frequency range is, for example, predefined as a non-zero Doppler frequency range.

The first Doppler frequency range being zero indicates that a radial velocity of a scatterer is zero, and the Doppler frequency is used to determine a motion velocity of the scatterer. In some scenarios, performing sensing on a stationary scatterer is of slight significance. Therefore, the communication method in embodiments of the present disclosure may, for example, focus on a mobile scatterer by using a non-zero first Doppler frequency range. In addition, the first Doppler frequency range may be, for example, predefined in a standard, to reduce configuration overheads. Alternatively, the first Doppler frequency range may be, for example, preconfigured.

For example, the third signal power may be, for example, calculated according to the following Formula (13) or Formula (14): ${A}_{3} {\int }_{D ∈ Γ} {\int }_{f ∈ Λ} {\left|{\sum }_{i , k} {H}_{i , k} exp \left(j2πD\frac{k}{{N}_{1}}\right) exp \left(-j2{πfT}_{i}\right)\right|}^{2}$ (13) ${A}_{3} {\sum }_{D ∈ Γ} {\sum }_{f ∈ Λ} {\left|{\sum }_{i , k} {H}_{i , k} exp \left(j2πD\frac{k}{{N}_{1}}\right) exp \left(-j2{πfT}_{i}\right)\right|}^{2}$ (14)

*H_{i,k}* represents a channel response coefficient, on a time unit (for example, an OFDM symbol) *i* and on a frequency domain unit *k*, determined based on the result of the target reference signal. For a manner of determining the time unit and the frequency domain unit, refer to the foregoing related descriptions. *A*₃ is a constant, for example, *A*₃ = 1. For descriptions of other symbols in the formula, refer to the descriptions in the foregoing Formulas (1) to (12). For variations of the formula, refer to the foregoing descriptions. Details are not described herein again.

For example, the third signal power is determined based on a power of a path with a highest power among multiple target paths, the multiple target paths are multiple paths determined based on the target reference signal, and a Doppler frequency of each of the multiple target paths falls within the first Doppler frequency range, and a delay of each path falls within the first delay range.

A power of a path whose Doppler frequency is *f* and whose delay is D is determined according to the following Formula (15): ${A}_{3} {\left|{\sum }_{i , k} {H}_{i , k} exp \left(j2πD\frac{k}{{N}_{1}}\right) exp \left(-j2{πfT}_{i}\right)\right|}^{2}$ (15)

Formula (15) may also have other variations as described above, and details are not described herein again.

It should be noted that, when the third signal power is calculated according to Formula ((15), Condition 7 may also be understood as follows: Among multiple paths determined based on the target reference signal, a delay of a path falls within the first delay range, a Doppler frequency of the path falls within the first Doppler frequency range, and a power at which the signal is transmitted to the first apparatus through the path is greater than or equal to the third power threshold.

FIG. 5A schematically shows an interaction diagram of performing a communication method by a communication system according to an embodiment of the present disclosure.

As shown in FIG. 5A, the communication method according to this embodiment of the present disclosure may include an operation S51 to an operation S53.

Different from the embodiment shown in FIG. 3, in the communication method in this embodiment of the present disclosure, the target beam associated with the target reference signal in the embodiment in FIG. 3 is used as a wide beam, and beam training is performed based on the wide beam to obtain a fine beam. The "wide beam" and the "fine beam" herein are relative. In other words, in a beam training process of a sensing scenario, a coarse beam may be first used to determine an approximate direction of a to-be-sensed scatterer, then, a precise direction of the scatterer is further determined by using a fine beam near the direction of the coarse beam. Compared to performing beam training by directly using a fine beam, this approach can reduce beam training overheads.

The method shown in FIG. 5A may be generally understood as a subsequent method following S31 to S33. For example, one or more "target reference signals" may be determined by performing the operations S31 to S33, which are denoted as one or more reference signals A (that is, the first reference signal mentioned below). The reference signal A is associated with a wide beam (that is, a transmit end and a receive end send and receive the reference signal A over wide beams). Subsequent operations S51 to S53 may be understood as a process of determining a fine beam based on the wide beam. In other words, in this embodiment of this application, a new target reference signal may be determined, and a beam associated with the new target reference signal is a sub-beam of the wide beam determined in S31 to S33 (that is, the transmit end and the receive end send and receive the new target reference signal over finer beams). Therefore, the target reference signal in this embodiment of this application may be different from the "target reference signal" in S31 to S33.

In the operation S51, a third apparatus sends second configuration information to a first apparatus.

For example, the second configuration information may include a first delay range, a first Doppler frequency range, a first difference or a first ratio, a second difference or a second ratio, a third difference or a third ratio. On this basis, the second configuration information may further include at least one of a first probability threshold, a second probability threshold, a similarity threshold, and a variation threshold. It should be further noted that the first difference or the first ratio may be used to determine a first power threshold, the second difference or the second ratio may be used to determine a second power threshold, and the third difference or the third ratio may be used to determine a third power threshold. In other words, in this embodiment of this application, the second configuration information may not include at least one of the first power threshold, the second power threshold, and the third power threshold, which instead are indirectly determined based on a corresponding difference and ratio.

For example, the first delay range and the first Doppler frequency range may be the same as those in the embodiment shown in FIG. 3. For example, the first delay range and the first Doppler frequency range may be sent to the first apparatus in the operation S31 in the foregoing embodiment, that is, the first delay range, the first Doppler frequency range, and the like included in the second configuration information do not need to be repeatedly sent in the operation S51. For another example, in the operation S31 in the foregoing embodiment, the third apparatus may send configuration information including the first delay range, the first Doppler frequency range, and the like to the first apparatus, that is, the configuration information in the operation S31 may include the second configuration information in this embodiment.

For example, the second configuration information may further include configuration information of one or more reference signal resources. For configuration information of a reference signal resource, refer to the descriptions of the operation S31 in FIG. 3. To distinguish from the embodiment shown in FIG. 3, the one or more reference signal resources configured in this embodiment may be a second reference signal resource for sending a second reference signal.

For example, the configuration information of the reference signal resource may include beam information associated with the second reference signal resources. For specific beam configuration information, refer to related descriptions in S31. Details are not described herein again.

For example, the configuration information of the reference signal resource may include reference signal resources associated with the second reference signal resources, and the associated reference signal resources are used to determine the first power (or amplitude) threshold, the second power (or amplitude) threshold, and the third power (or amplitude) threshold. Since the power and the amplitude may be generally converted to each other, the following uses the power as an example for description. An amplitude-based determining method can be equivalently derived, and details are not described herein again. Specifically, when a reference signal is sent on a second reference signal resource over a fine beam, and a reference signal is sent on a reference signal resource associated with the second reference signal resource over a wide beam, the wide beam covers the fine beam. For example, if the target reference signal resource is one of multiple second reference signal resources, the target reference signal resource is associated with a target beam (which may be a transmit beam and/or a receive beam), the target reference signal resource is associated with a first reference signal resource, and the first reference signal resource is associated with a first beam (which may be a transmit beam and/or a receive beam), the first beam covers the target beam. It should be noted that the multiple second reference signal resources may be associated with different reference signal resources, or may be associated with a same reference signal resource.

For example, the one or more "target reference signals" determined in S33 may be configured as a reference signal associated with the second reference signal in this operation. In other words, the beam associated with the second reference signal configured in this operation may be a sub-beam of the beam associated with the "target reference signal" determined in S33.

In the operation S52, a second apparatus sends at least one second reference signal to the first apparatus.

For example, based on one or more configured reference signal resources, one or more second reference signals may be sent or received on the reference signal resources.

For example, the second apparatus may further send the second reference signal over a corresponding transmit beam based on configured beam information, and the first apparatus receives the second reference signal over a corresponding receive beam.

For example, the second apparatus may directly or indirectly send the second reference signal to the first apparatus, that is, the first apparatus may directly or indirectly receive the second reference signal from the second apparatus. For meanings of "directly" and "indirectly", refer to detailed descriptions of the operation S32 in the foregoing embodiment. Details are not described herein again.

In the operation S53, the first apparatus reports information about a target reference signal and/or beam information associated with the target reference signal to the third apparatus.

The at least one second reference signal includes the target reference signal.

The target reference signal meets the first condition, and one or more target reference signals may be determined.

For example, for Condition 1 to Condition 7 included in the first condition, refer to the detailed descriptions in the foregoing embodiment. Details are not described herein again. It should be noted that, different from the foregoing embodiment, in this embodiment of the present disclosure, the first power threshold, the second power threshold, and the third power threshold corresponding to Condition 5, Condition 6, and Condition 7 are determined in the following manner:

The first power threshold may be, for example, determined based on a fourth signal power and the first difference or the first ratio, the third signal power is a signal power of a first reference signal within the first delay range, and the first reference signal is a reference signal associated with the target reference signal.

The second power threshold may be, for example, determined based on a fifth signal power and the second difference or the second ratio, the fourth signal power is a power of a first reference signal within the first Doppler frequency range, and the first reference signal is a reference signal associated with the target reference signal.

The third power threshold may be, for example, determined based on a sixth signal power and the third difference or the third ratio, the sixth signal power is a signal power of a first reference signal within the first Doppler frequency range and within the first delay range, and the first reference signal is a reference signal associated with the target reference signal.

It should be understood that, since different target reference signal resources may be associated with different first reference signal resources, different target reference signal resources may need to meet different power thresholds.

For a specific method for calculating the signal power of the first reference signal and the target reference signal in the first delay range, the power of the first reference signal and the target reference signal in the first Doppler frequency range, and the power of the first reference signal and the target reference signal in the first Doppler frequency range and the first delay range, refer to related descriptions in S33. Details are not described herein again.

Optionally, similar to S33, the power threshold in the foregoing conditions may also be replaced with an amplitude threshold for determining.

For example, the first difference or the first ratio, the second difference or the second ratio, and the third difference or the third ratio may be determined based on, for example, a gain of the target beam relative to the first beam.

The first power threshold may be, for example, a sum of the fourth signal power and the first difference, the second power threshold may be, for example, a sum of the fifth signal power and the second difference, and the third power threshold may be, for example, a sum of the sixth signal power and the third difference. Alternatively, the first power threshold may be, for example, a product of the fourth signal power and the first ratio, the second power threshold may be, for example, a product of the fifth signal power and the second ratio, and the third power threshold may be, for example, a product of the sixth signal power and the third ratio.

The operation S51 to the operation S53 may be performed repeatedly. For example, multiple reference signal resources may be further configured. These reference signal resources are associated with the target reference signal resource determined in S53. On these reference signal resources, a reference signal may be sent over a finer beam, so as to find a finer beam applicable to sensing.

According to the communication method in this embodiment of the present disclosure, a finer target beam may be determined from the beam associated with the first reference signal based on the first power threshold, the second power threshold, and the third power threshold. The target beam has higher resolution, and wireless sensing accuracy and performance are higher.

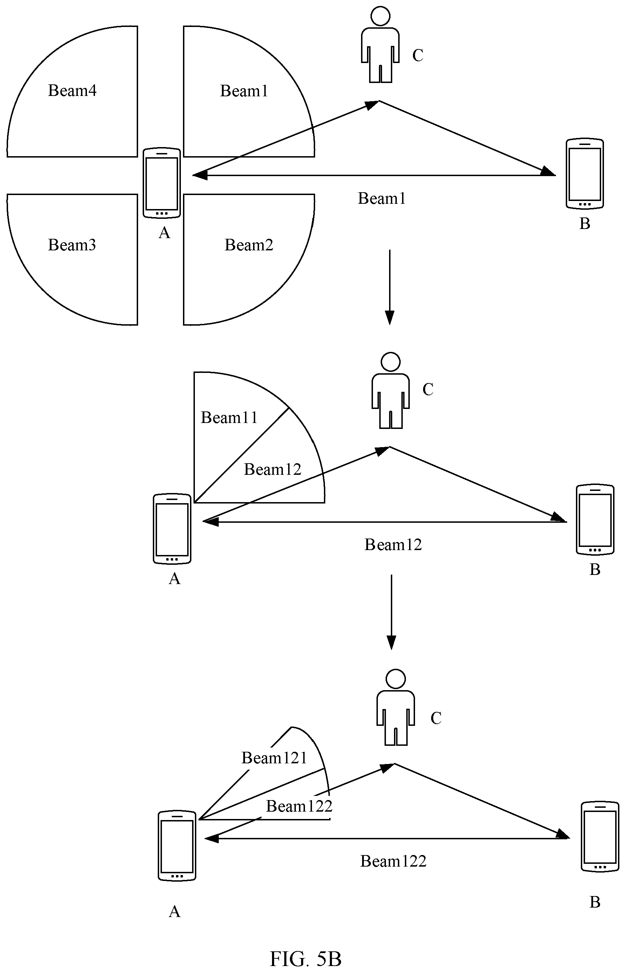

FIG. 5B schematically shows a diagram of improving wireless sensing accuracy through beam training.

As shown in FIG. 5B, a second apparatus A may send four corresponding reference signals to a first apparatus B over four beams Beam1 to Beam4. A scatterer C is present on a path of the beam Beam1. After receiving the four corresponding reference signals over the four beams Beam1 to Beam4, the first apparatus B may determine, according to a related method in S31 to S33, that a reference signal corresponding to the beam Beam1 is a target reference signal. When the third apparatus and the second apparatus are a same apparatus, the first apparatus B may send information about the target reference signal to the second apparatus A. For example, the first apparatus B may further report the target reference signal and/or the target beam Beam1 associated with the target reference signal to the second apparatus A.

The target reference signal serves as a first reference signal, and a first beam Beam1 associated with the first reference signal may be, for example, divided into Beam11 and Beam12. The two beams are respectively associated with a second reference signal a and a second reference signal b. A scatterer is present on a path of a second beam Beam12. After the first apparatus B receives the two corresponding second reference signals over the two second beams Beam11 and Beam12, the second reference signal b may be determined as a target reference signal according to a first condition (a first power threshold corresponding to the first condition herein is determined based on a fourth signal power and a first difference or a first ratio, a second power threshold corresponding to the first condition herein is determined based on a fifth signal power and a second difference or a second ratio, and a third power threshold corresponding to the first condition herein is determined based on a sixth signal power and a third difference or a third ratio). For example, the first apparatus B may further report the second reference signal b and/or the beam Beam12 to the second apparatus A.

Further, a target beam may be further determined from the wide first beam through beam training. In the example in FIG. 5B, for example, a target beam Beam122 may be further determined from the beam Beam12. This is similar to determining the target beam Beam12 from the beam Beam1, and details are not described herein again.

Since a sensing target in a wireless sensing scenario may be mobile, for example, whether a new sensing target appears in a current environment may be continuously sensed.

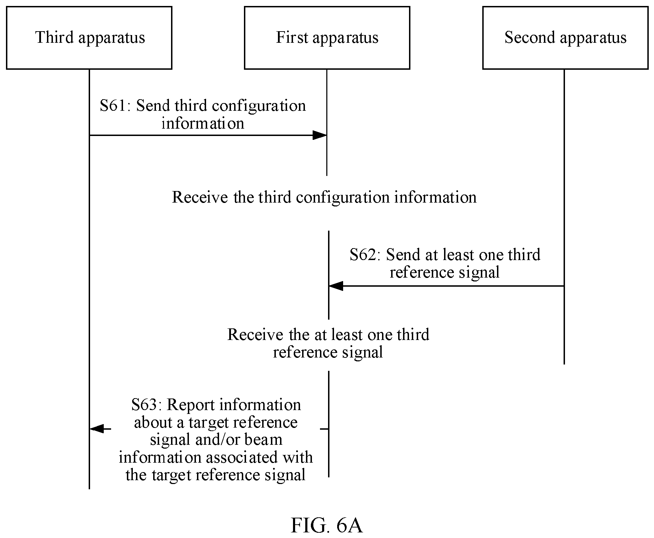

According to the communication method in still another embodiment of the present disclosure, wireless sensing may be performed by sensing whether a new sensing target appears in a current environment. FIG. 6A schematically shows an interaction diagram of performing a communication method by a communication system according to an embodiment of the present disclosure.

As shown in FIG. 6A, the communication method according to this embodiment of the present disclosure may include an operation S61 to an operation S63.

In the operation S61, a third apparatus sends third configuration information to a first apparatus.

For example, the third configuration information may include a similarity threshold. The third configuration information may further include a first delay range, a first Doppler frequency range, a first probability threshold, a second probability threshold, a first power threshold or a first difference or a first ratio, a second power threshold or a second difference or a second ratio, and a third power threshold or a third difference or a third ratio.

For a manner of sending the third configuration information, refer to the manner of sending the second configuration information in S51. In addition, the third configuration information may alternatively be included in the second configuration information, or may be sent together with the second configuration information.

For example, the third configuration information may further include configuration information of one or more reference signal resources. For the configuration information of the reference signal resource, refer to the descriptions of the operation S31 in FIG. 3. To distinguish from the embodiment shown in FIG. 3, the one or more reference signal resources configured in this embodiment may be a third reference signal resource for sending a third reference signal.

For example, the configuration information of the reference signal resource may include beam information associated with the third reference signal resources. For specific beam configuration information, refer to related descriptions in S31 and S51. Details are not described herein again.

For example, the configuration information of the reference signal resource may include baseline reference signal resources associated with the third reference signal resources, and the associated baseline reference signal resources are used to calculate a similarity. Specifically, when a reference signal is sent on a third reference signal resource over a wide beam, and a reference signal is sent on a baseline reference signal resource associated with the third reference signal resource over a fine beam, the wide beam covers the fine beam. For example, if the target reference signal resource is one of multiple third reference signal resources, the target reference signal resource is associated with a target beam, the target reference signal resource is associated with a baseline reference signal resource a, and the baseline reference signal resource a is associated with a baseline beam a, the target beam covers the baseline beam.

For example, the one or more target reference signals determined in S53 may be configured as the baseline reference signal in this operation, and a reference signal that can cover the baseline beam is configured as a third reference signal.

In the operation S62, the second apparatus sends at least one third reference signal to the first apparatus.

For example, based on one or more configured third reference signal resources, one or more third reference signals may be sent or received on the third reference signal resources.

For example, the second apparatus may further send the third reference signal over a corresponding transmit beam based on configured beam information, and the first apparatus receives the third reference signal over a corresponding receive beam.

For example, the second apparatus may directly or indirectly send the third reference signal to the first apparatus, that is, the first apparatus may directly or indirectly receive the third reference signal from the second apparatus. For meanings of "directly" and "indirectly", refer to detailed descriptions of the operation S32 in the foregoing embodiment. Details are not described herein again.

In the operation S63, the first apparatus reports information about a target reference signal to the third apparatus.

The at least one third reference signal includes the target reference signal.

The target reference signal meets a first condition, and the first condition includes at least one of the following:

Condition 8: A similarity (which may also be understood as a correlation) between a measurement result of the target reference signal and a measurement result of a baseline reference signal is less than or equal to a similarity threshold (which may also be understood as a correlation threshold), where the baseline reference signal is associated with the target reference signal. Optionally, the measurement result of the target reference signal is determined based on a signal of the target reference signal in a first time range, and the measurement result of the baseline reference signal is determined based on a signal of the baseline reference signal in a second time range. There is an intersection between the first time range and the second time range. In a special case, the first time range and the second time range are the same. For example, when a third reference signal and a baseline reference signal associated with the third reference signal are both periodic reference signals and have a same periodicity, for each periodicity, a measurement result of the third reference signal obtained in the periodicity and a measurement result of the associated baseline reference signal obtained in the periodicity may be calculated, and then a similarity between the measurement results is calculated to determine whether Condition 8 is met.

Condition 9: A variation of a measurement result of the target reference signal is greater than or equal to a variation threshold. For example, when a third reference signal is a periodic reference signal, for each periodicity, a measurement result of the third reference signal obtained in the periodicity may be calculated, and then a variation between the measurement result of the third reference signal obtained in the periodicity and a measurement result of the third reference signal obtained in a previous periodicity is calculated (for example, the variation may be represented by a difference or a ratio), to determine whether Condition 9 is met.

Whether a new sensing target appears in a current environment may be determined according to the foregoing Condition 8. For example, when it is determined, based on the baseline reference signal (associated with a fine beam), that a scatterer A is present in the current environment, if a reference signal RSᵢ is associated with a coarse beam and covers the fine beam, the first apparatus determines, based on the RSᵢ, that a scatterer X is present. The scatterer X may be the scatterer A, or may be a scatterer different from the scatterer A, and a similarity between a measurement result of the reference signal RSᵢ and the measurement result of the baseline reference signal may reflect whether the scatterer X is the scatterer A. For example, when the similarity is less than or equal to the similarity threshold, it indicates that a new scatterer different from the scatterer A is present in the current environment. When the similarity between the measurement result of the reference signal RSᵢ and the measurement result of the baseline reference signal is less than or equal to the similarity threshold, the reference signal RSᵢ is a target reference signal. When the similarity between the measurement result of the reference signal RSᵢ and the measurement result of the baseline reference signal is greater than the similarity threshold, the reference signal RSᵢ is not a target reference signal. For the determined target reference signal, it may be determined that a new scatterer possibly appears under the coarse beam. In this case, fine beam sweeping may be further performed to find a position of the new scatterer.

For example, the similarity is a similarity between a delay spectrum of the target reference signal and a delay spectrum of the baseline reference signal, or the similarity is a similarity between a Doppler spectrum of the target reference signal and a Doppler spectrum of the baseline reference signal, or the similarity is a similarity between a delay-Doppler spectrum of the target reference signal and a delay-Doppler spectrum of the baseline reference signal.

The delay-Doppler spectrum may represent power, amplitude, or energy distribution in a delay dimension and a Doppler frequency dimension.

A specific similarity calculation method may be, for example, a cosine similarity or channel state information correlation, or may be another calculation method. This is not limited in embodiments of this application.

The baseline reference signal being associated with the target reference signal is embodied as, for example, that the baseline reference signal is associated with the baseline beam, the target reference signal is associated with the target beam, and the target beam covers the baseline beam. The baseline beam may also be understood as a sub-beam of the target beam.

Whether a new sensing target appears in a current environment may be determined according to the foregoing Condition 9. For example, appearance of a new scatterer under a beam may lead to a change of a channel measurement result under the beam. Therefore, a target beam may be determined based on the variation of the measurement result according to Condition 9. The measurement result may specifically be a channel response coefficient, a delay spectrum, a Doppler spectrum, a delay-Doppler spectrum, or the like. When the variation is specifically calculated, the variation may be a difference or a ratio between earlier and later measurement results, or a percentage of the difference between earlier and later measurement results in the earlier measurement result or in the later measurement result.

According to the communication method in this embodiment of the present disclosure, for a scenario in which a scatterer is present on a path of a baseline beam, a target reference signal may be determined from at least one reference signal based on a similarity between a reference signal associated with a wide beam covering the baseline beam and a baseline reference signal associated with the baseline beam in a delay spectrum dimension, a Doppler spectrum, or a delay-Doppler spectrum, or a change of a measurement result of the reference signal in terms of time, where the target reference signal represents that a new scatterer is present on a transmission path of the target reference signal.

For example, after the target reference signal is determined according to the foregoing Condition 8 or 9, a finer beam under a beam of the target reference signal may be further determined according to a related method in the embodiment from S51 to S53, to perform more accurate sensing on the scatterer.

It should be noted that the first condition may further include, for example, at least one of Condition 1 to Condition 7. Therefore, the first condition may include at least one of Condition 1 to Condition 9.

For example, the first condition may include Condition 1 and Condition 8. Presence of a scatterer can be determined according to Condition 1, and presence of a scatterer on a transmission path of a target reference signal can be determined based on a similarity according to Condition 8.

For another example, the first condition may include Condition 1, Condition 3, Condition 8, and/or Condition 9. Presence of a scatterer can be determined according to Condition 1, accuracy of determining a scatterer can be improved based on a first probability threshold according to Condition 3, presence of a scatterer on a transmission path of a target reference signal can be determined based on a similarity according to Condition 8, and a target beam can be determined based on a variation of a measurement result according to Condition 9.

For another example, the first condition may include Condition 2, Condition 8, and/or Condition 9. Presence of a mobile scatterer can be determined according to Condition 2, presence of a scatterer on a transmission path of a target reference signal can be determined based on a similarity according to Condition 8, and a target beam can be determined based on a variation of a measurement result according to Condition 9.

For another example, the first condition may include Condition 2, Condition 4, Condition 8, and/or Condition 9. Presence of a mobile scatterer can be determined according to Condition 2, accuracy of determining a mobile scatterer can be improved based on a second probability threshold according to Condition 4, presence of a scatterer on a transmission path of a target reference signal can be determined based on a similarity according to Condition 8, and a target beam can be determined based on a variation of a measurement result according to Condition 9.

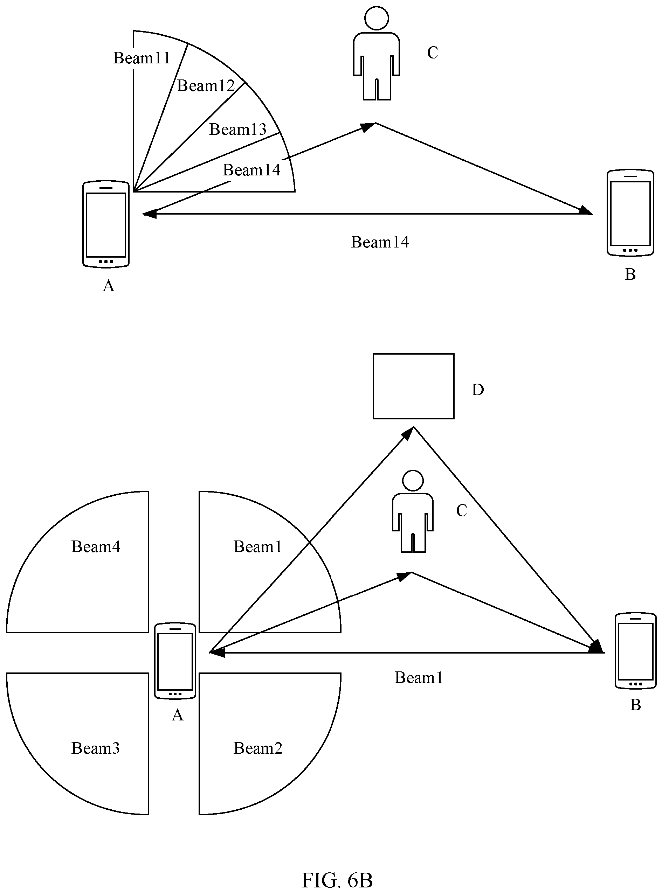

FIG. 6B schematically shows a diagram of a communication method according to an embodiment of the present disclosure for continuously sensing whether a new sensing target appears in a current environment.

As shown in FIG. 6B, a scatterer C is present on a path of a baseline beam Beam14 associated with a baseline reference signal. When the third apparatus and the second apparatus are a same apparatus, a first apparatus B may, for example, report information sensed on the baseline beam Beam14 to a second apparatus A. In addition, to detect whether a new scatterer appears in another beam direction, when continuously sensing the scatterer C by sending a reference signal over the baseline beam Beam14, the second apparatus A may further send reference signals over four wide beams (for example, Beam1 to Beam4 in the figure) to detect whether a new scatterer appears. For Beam2 to Beam4, since no scatterers were originally detected, the first apparatus may determine, based on the method described in S33, whether a scatterer present (or a new scatterer appears). For Beam1, since the scatterer C was originally present, the first apparatus can always detect presence of the scatterer by receiving a reference signal sent over Beam1. To further distinguish whether the scatterer is the scatterer C that was originally detected by using a fine beam or a new scatterer, the first apparatus may calculate a similarity between a measurement result of Beam1 and a measurement result of Beam14 to determine whether a new scatterer appears, or may calculate a change of the measurement result of Beam1 to determine whether a new scatterer appears. For example, a measurement result of a reference signal RS1 (associated with Beam1) received by the first apparatus B differs greatly from a measurement result of a baseline reference signal (associated with Beam14), where the difference may be represented by, for example, a similarity in terms of a delay spectrum, a Doppler spectrum, or a delay-Doppler spectrum. When the similarity is less than or equal to a similarity threshold, it may be considered that the reference signal RS1 is a target reference signal, and the first apparatus B may report the target reference signal RS1 to the second apparatus A, and may further report the target beam Beam1 associated with the target reference signal RS1.

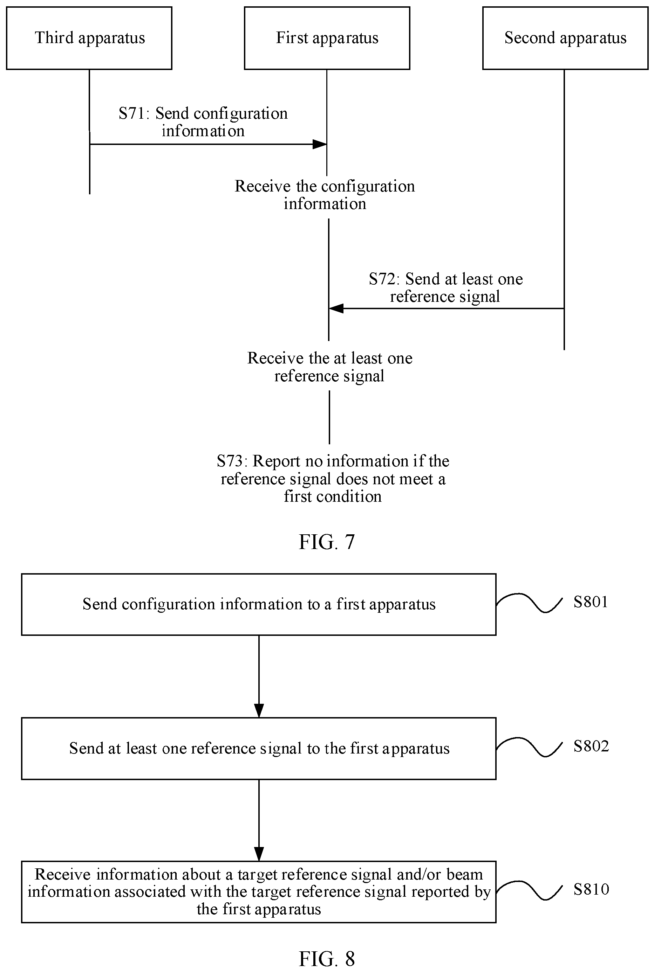

FIG. 7 schematically shows an interaction diagram of a communication method according to another embodiment of the present disclosure.

As shown in FIG. 7, the communication method according to this embodiment of the present disclosure may include an operation S71 to an operation S73.

In the operation S71, a third apparatus sends configuration information to a first apparatus.

The first apparatus may receive the configuration information from the third apparatus.

For the operation S71, refer to the operation S31 in the embodiment in FIG. 3. Details are not described herein again. The configuration information in this embodiment may further indicate that the first apparatus reports no information if none of reference signals received by the first apparatus meets a first condition. The reference signal in this embodiment of this application may not be associated with a transmit beam and/or a receive beam.

In the operation S72, a second apparatus sends at least one reference signal; and the first apparatus receives the at least one reference signal.

For the operation S72, refer to the operation S32 in the embodiment in FIG. 3. Details are not described herein again.

In the operation S73, when the reference signal received by the first apparatus meets the first condition, the first apparatus may report information about a target reference signal and/or beam information associated with the target reference signal to the third apparatus, and may further report a measurement result of the target reference signal, for example, a reference signal received power of the target reference signal, a signal power of the reference signal, a Doppler frequency (which may be one or more frequencies) of the reference signal, a delay (which may be one or more delays) of the reference signal, receive beam information of the reference signal, a probability of scatterer presence corresponding to the reference signal, a probability of mobile scatterer presence corresponding to the reference signal, a delay spectrum or a Doppler spectrum or a delay-Doppler spectrum corresponding to the reference signal, a power and/or an amplitude of the reference signal received through a path, and one or more angles of arrival obtained by measuring the reference signal. The first apparatus reports no information if none of the reference signals received by the first apparatus meets the first condition. The first condition may include one or more of the foregoing Condition 1 to Condition 9.

For example, when the reference signal received by the first apparatus meets the first condition, for reporting the information about the target reference signal and/or the beam information associated with the target reference signal to the third apparatus, refer to the operation S33 in FIG. 3. Details are not described herein again. FIG. 7 schematically shows an embodiment in which the first apparatus may report no information when none of the reference signals received by the first apparatus meets the first condition in the operation S73.

According to the communication method in this embodiment of the present disclosure, after the information about the first condition is configured in the configuration phase, in a subsequent communication phase (a sensing phase or an integrated sensing and communication phase), after receiving a reference signal, the first apparatus may report, based on the first condition, information about a target reference signal that meets the first condition. In addition, after the first apparatus receives a reference signal, if no reference signal meets the first condition, the first apparatus may not report any information to the third apparatus, to reduce communication overheads and energy consumption. In addition, in this embodiment of this application, a reference signal configured by using the configuration information may not be associated with a transmit beam and a receive beam. For example, when both the first apparatus and the second apparatus receive and send a reference signal over omnidirectional beams, and no scatterers enter a current environment, main power in a Doppler spectrum detected by the first apparatus is concentrated at a zero Doppler frequency. In this case, the first apparatus may not perform any reporting. When detecting that the main power is concentrated at a non-zero Doppler frequency, the first apparatus performs reporting.

With reference to the interaction diagram of FIG. 3, FIG. 8 schematically shows a flowchart of a communication method performed by a third apparatus according to an embodiment of the present disclosure.

As shown in FIG. 8, the communication method according to this embodiment of the present disclosure includes an operation S810.

In the operation S810, information about a target reference signal and/or beam information associated with the target reference signal reported by a first apparatus is received.

The target reference signal is a reference signal that meets a first condition, and the first condition includes at least one of the following:
a first signal power obtained by measuring the target reference signal is greater than or equal to a first power threshold, where the first signal power is a signal power within a first delay range;
a second signal power obtained by measuring the target reference signal is greater than or equal to a second power threshold, where the second signal power is a signal power within a first Doppler frequency range;
a third signal power obtained by measuring the target reference signal is greater than or equal to a third power threshold, where the third signal power is a signal power within the first Doppler frequency range and the first delay range;
determining, based on the target reference signal, that a scatterer is present;
determining, based on the target reference signal, that a mobile scatterer is present;
determining, based on the target reference signal, that a probability of scatterer presence is greater than or equal to a first probability threshold;
determining, based on the target reference signal, that a probability of mobile scatterer presence is greater than or equal to a second probability threshold;
a similarity between a measurement result of the target reference signal and a measurement result of a baseline reference signal is less than or equal to a similarity threshold, where the baseline reference signal is associated with the target reference signal; and
a variation of a measurement result of the target reference signal is greater than or equal to a variation threshold.

It should be noted that the communication method performed by the third apparatus according to this embodiment of the present disclosure corresponds to the foregoing communication method performed by the first apparatus. For related technical features, technical principles, and technical effects, refer to the foregoing communication method performed by the first apparatus. Details are not described herein again.

As shown in FIG. 8, for example, before the information about the target reference signal reported by the first apparatus is received, the communication method according to another embodiment of the present disclosure may further include an operation S801.

In the operation S801, configuration information is sent to the first apparatus.

The configuration information indicates the first apparatus to report information about a reference signal that meets the first condition.

The configuration information includes at least one of the following: the first power threshold, the first delay range, the second power threshold, the first Doppler frequency range, the third power threshold, the first probability threshold, the second probability threshold, the similarity threshold, and the variation threshold.

The configuration information includes information about at least one transmit beam and/or information about at least one receive beam, each of the at least one reference signal is associated with one of the at least one transmit beam, and/or each of the at least one reference signal is associated with one of the at least one receive beam.

For specific descriptions of the configuration information, refer to related descriptions in the foregoing embodiments.

Optionally, the foregoing configuration information may be further sent to a second apparatus.

In an operation S802, at least one reference signal is sent to the first apparatus.

The at least one reference signal includes the target reference signal.

In this case, the third apparatus and the second apparatus are a same apparatus.

According to embodiments of the present disclosure, the present disclosure further provides a communication apparatus, a communication system, a computer-readable storage medium, and a computer program product.

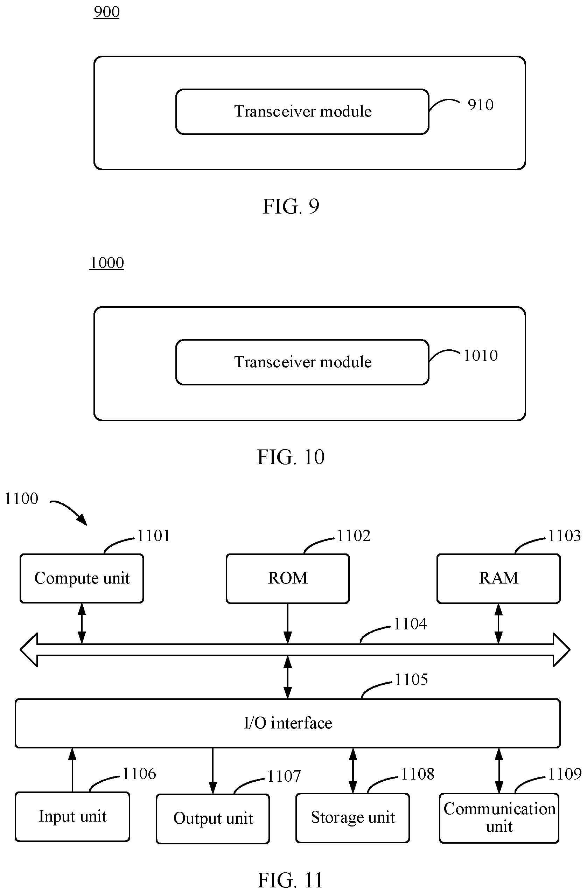

FIG. 9 schematically shows a diagram of a communication apparatus 900 according to an embodiment of the present disclosure, which includes a transceiver module 910. The transceiver module 910 of the communication apparatus 900 is configured to perform the communication method according to any one of the foregoing embodiments performed by the first apparatus.

FIG. 10 schematically shows a diagram of a communication apparatus 1000 according to another embodiment of the present disclosure, which includes a transceiver module 1010. The transceiver module 1010 of the communication apparatus 1000 is configured to perform the communication method according to any one of the foregoing embodiments performed by the third apparatus.

A communication apparatus according to still another embodiment of the present disclosure may include a processor and an interface circuit. The interface circuit is configured to receive a signal from another communication apparatus other than the communication apparatus and transmit the signal to the processor, or send a signal from the processor to another communication apparatus other than the communication apparatus. The processor is configured to perform the foregoing communication method by using a logic circuit or by executing code instructions.

In some embodiments, the instructions are stored in a memory. The memory is communicatively connected to or coupled to the processor.

In some embodiments, the communication apparatus is a chip.

Embodiments of the apparatus section of the present disclosure are correspondingly the same as or similar to embodiments of the method section of the present disclosure, and technical issues addressed and technical effects achieved are also correspondingly the same or similar. Details are not described herein again in present disclosure.

A communication system according to an embodiment of the present disclosure may include a communication apparatus corresponding to the first apparatus and a communication apparatus corresponding to the third apparatus in the foregoing embodiments.

The communication system according to another embodiment of the present disclosure may further include a second apparatus configured to send at least one reference signal to the first apparatus.

FIG. 11 shows a block diagram of an example communication apparatus 1100 that may be used to implement still another embodiment of the present disclosure. The communication apparatus includes various forms of digital computers, such as a laptop computer, a desktop computer, a workstation, a personal digital assistant, a server, a blade server, a mainframe computer, and other suitable computers. The communication apparatus may also include various forms of mobile apparatuses, such as personal digital assistant, a cellular phone, a smartphone, a wearable device, and other similar compute apparatuses. The components shown in this specification, connections and relationships thereof, and functions thereof are merely examples, and are not intended to limit the implementations of the present disclosure described and/or required in this specification.

As shown in FIG. 11, the communication apparatus 1100 includes a compute unit 1101, which may perform various appropriate actions and processing according to a computer program stored in a read-only memory (read-only memory, ROM) 1102 or a computer program loaded from a storage unit 1108 to a random access memory (random access memory, RAM) 1103. The RAM 1103 may further store various programs and data required for an operation of the communication apparatus 1100. The compute unit 1101, the ROM 1102, and the RAM 1103 are connected to each other through a bus 1104. An input/output (input/output, I/O) interface 1105 is also connected to the bus 1104.

Multiple components in the communication apparatus 1100 are connected to the I/O interface 1105, and include: an input unit 1106, for example, a keyboard or a mouse; an output unit 1107, for example, various types of displays or speakers; a storage unit 1108, for example, a magnetic disk or an optical disc; and a communication unit 1109, for example, a network adapter, a modem, or a wireless communication transceiver. The communication unit 1109 allows the device 1100 to exchange information/data with another device by using a computer network such as the Internet and/or various telecommunications networks.

The compute unit 1101 may be various general-purpose and/or dedicated processing components that have processing and computing capabilities. Some examples of the compute unit 1101 include but are not limited to a central processing unit (central processing unit, CPU), a graphics processing unit (graphics processing unit, GPU), various dedicated artificial intelligence (artificial intelligence, AI) computing chips, various compute units running machine learning model algorithms, a digital signal processor (digital signal processor, DSP), and any appropriate processor, controller, microcontroller, and the like. The compute unit 1101 performs the methods and processing described above, for example, the communication method. For example, in some embodiments, the foregoing method may be implemented as a computer software program. The computer software program is embodied in a machine-readable medium, for example, the storage unit 1108. In some embodiments, a part or all of the computer program may be loaded and/or installed on the communication apparatus 1100 by using the ROM 1102 and/or the communication unit 1109. When the computer program is loaded into the RAM 1103 and executed by the compute unit 1101, one or more steps of the communication method described above may be performed. Alternatively, in other embodiments, the compute unit 1101 may be configured to perform the communication method in any other proper manner (for example, by using firmware).

Various implementations of the systems and technologies described above in this specification may be implemented in a digital electronic circuit system, an integrated circuit system, a field programmable gate array (field programmable gate array, FPGA), an application-specific integrated circuit (application-specific integrated circuit, ASIC), an application-specific standard product (application-specific standard product, ASSP), a system on a chip (system on a chip, SOC), a complex programmable logic device (complex programmable logic device, CPLD), computer hardware, firmware, software, and/or a combination thereof. These various implementations may include implementation in one or more computer programs. The one or more computer programs may be executed and/or interpreted in a programmable system including at least one programmable processor. The programmable processor may be a dedicated or general-purpose programmable processor, and may receive data and instructions from a storage system, at least one input apparatus, and at least one output apparatus and transmit data and instructions to the storage system, the at least one input apparatus, and the at least one output apparatus.

Program code for implementing the method in the present disclosure may be written in any combination of one or more programming languages. The program code may be provided to a processor or a controller of a general-purpose computer, a dedicated computer, or another programmable data processing apparatus, so that when the program code is executed by the processor or controller, the functions/operations specified in the flowchart and/or the block diagram are implemented. The program code may be completely executed on a machine, partially executed on a machine, partially executed on a machine as a stand-alone software package and partially executed on a remote machine, or completely executed on a remote machine or server.

In the context of the present disclosure, the machine-readable medium may be a tangible medium, and may include or store a program for use by or in combination with an instruction execution system, an apparatus, or a device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination of the foregoing content. A more specific example of the machine-readable storage medium may include an electrical connection based on one or more lines, a portable computer disk, a hard disk, a random access memory (RAM), a read-only memory (ROM), an erasable programmable read-only memory (EPROM), an optical fiber, a compact disc read-only memory (CD-ROM), an optical storage device, a magnetic storage device, a flash memory, or any appropriate combination of the foregoing content.

To provide interaction with a user, the system and technologies described herein may be implemented on a computer, where the computer has a display apparatus (for example, a cathode ray tube (CRT) or a liquid crystal display (liquid crystal display, LCD) monitor) for displaying information to the user, and a keyboard and a pointing apparatus (for example, a mouse or a trackball), and the user may provide input to the computer by using the keyboard and the pointing apparatus. Another type of apparatus may be further configured to provide interaction with the user. For example, a feedback provided for the user may be any form of sensor feedback (for example, a visual feedback, an auditory feedback, or a tactile feedback). In addition, an input from the user may be received in any form (including a sound input, a voice input, or a tactile input).

The system and technologies described herein may be implemented in a computing system including a back-end component (for example, serving as a data server), a computing system including a middleware component (for example, an application server), a computing system including a front-end component (for example, a user computer having a graphical user interface or a web browser, where a user may interact with an implementation of the system and technologies described herein by using the graphical user interface or the web browser), or a computing system including any combination of the back-end component, the middleware component, or the front-end component. Components of the system may be interconnected through digital data communication (for example, a communication network) in any form or using any medium. Examples of communication networks include: a local area network (local area network, LAN), a wide area network (wide area network, WAN), and the Internet.

The computer system may include clients and servers. The client and the server are usually far away from each other and usually interact over the communication network. A relationship between the client and the server is generated by running computer programs, having a client-server relationship with each other, on corresponding computers.

It should be understood that steps may be reordered, added, or deleted by using the foregoing various forms of processes. For example, the steps described in the present disclosure may be performed in parallel, may be sequentially performed, or may be performed in a different sequence. This is not limited herein provided that an expected result of the technical solutions disclosed in the present disclosure can be implemented.

The foregoing specific implementations do not constitute a limitation on the protection scope of the present disclosure. A person skilled in the art should understand that various modifications, combinations, sub-combinations, and substitutions may be made based on design requirements and other factors. Any modification, equivalent substitution, improvement, and the like made in the spirit and principle of the present disclosure shall fall within the protection scope of the present disclosure.

## Claims

1. A communication method, applied to a first apparatus and comprising:
receiving at least one reference signal sent by a second apparatus; and
reporting information about a target reference signal and/or beam information associated with the target reference signal to a third apparatus, wherein the at least one reference signal comprises the target reference signal, the target reference signal is a reference signal that meets a first condition, and the first condition comprises at least one of the following:
a first signal power obtained by measuring the target reference signal is greater than or equal to a first power threshold, wherein the first signal power is a signal power within a first delay range;
a second signal power obtained by measuring the target reference signal is greater than or equal to a second power threshold, wherein the second signal power is a signal power within a first Doppler frequency range;
a third signal power obtained by measuring the target reference signal is greater than or equal to a third power threshold, wherein the third signal power is a signal power within the first Doppler frequency range and the first delay range;
determining, based on the target reference signal, that a scatterer is present;
determining, based on the target reference signal, that a mobile scatterer is present;
determining, based on the target reference signal, that a probability of scatterer presence is greater than or equal to a first probability threshold;
determining, based on the target reference signal, that a probability of mobile scatterer presence is greater than or equal to a second probability threshold;
a similarity between a measurement result of the target reference signal and a measurement result of a baseline reference signal is less than or equal to a similarity threshold, wherein the baseline reference signal is associated with the target reference signal; and
a variation of a measurement result of the target reference signal is greater than or equal to a variation threshold.

2. The method according to claim 1, wherein before the reporting the information about the target reference signal to the third apparatus, further comprising:
receiving configuration information sent by the third apparatus, wherein the configuration information indicates the first apparatus to report information about a reference signal that meets the first condition.

3. The method according to claim 1 or 2, wherein before the reporting the information about the target reference signal to the third apparatus, further comprising:
receiving configuration information sent by the third apparatus, wherein the configuration information comprises at least one of the following: the first power threshold, the first delay range, the second power threshold, the first Doppler frequency range, the third power threshold, the first probability threshold, the second probability threshold, the similarity threshold, and the variation threshold.

4. The method according to claim 1, wherein before the reporting the information about the target reference signal to the third apparatus, further comprising:
receiving configuration information sent by the third apparatus, wherein the configuration information comprises information about at least one transmit beam and/or information about at least one receive beam, each of the at least one reference signal is associated with one of the at least one transmit beam, and/or each of the at least one reference signal is associated with one of the at least one receive beam.

5. The method according to claim 1, wherein the first power threshold is determined based on a fourth signal power and a first difference or a first ratio, the fourth signal power is a signal power of a first reference signal within the first delay range, and the first reference signal is associated with the target reference signal.

6. The method according to claim 1, wherein the second power threshold is determined based on a fifth signal power and a second difference or a second ratio, the fifth signal power is a power of a first reference signal within the first Doppler frequency range, and the first reference signal is associated with the target reference signal.

7. The method according to claim 1, wherein the third power threshold is determined based on a sixth signal power and a third difference or a third ratio, the sixth signal power is a signal power of a first reference signal within the first delay range and within the first Doppler frequency range, and the sixth reference signal is associated with the target reference signal.

8. The method according to any one of claims 5 to 7, wherein the first reference signal is associated with a first beam, the target reference signal is associated with a target beam, and the first beam covers the target beam.

9. The method according to claim 1, wherein the first signal power is calculated according to one of the following formulas: ${A}_{1} {\int }_{D ∈ Γ} {\left|{\sum }_{k} {H}_{k} exp \left(j2πD\frac{k}{{N}_{1}}\right)\right|}^{2} ,$ or ${A}_{1} {{\sum }_{D ∈ Γ} \left|{\sum }_{k} {H}_{k} exp \left(j2πD\frac{k}{{N}_{1}}\right)\right|}^{2} ,$ wherein
*Γ* represents the first delay range, *Hₖ* represents a channel response coefficient, on a frequency domain unit k, determined based on the measurement result of the target reference signal, D represents a delay within the first delay range, *N*₁ is determined based on a bandwidth of the target reference signal, or *N*₁ represents a quantity of inverse discrete Fourier transform IDFT points, and *A*₁ is a constant.

10. The method according to claim 1, wherein the first signal power is determined based on a power of a path with a highest power among multiple target paths, the multiple target paths are multiple paths determined based on the target reference signal, and a delay of each of the multiple target paths falls within the first delay range; and
a power of a path whose delay is *Dₚ* is determined according to the following formula: ${A}_{1} {\left|{\sum }_{k} {H}_{k} exp \left(j2{πD}_{p}\frac{k}{{N}_{1}}\right)\right|}^{2} ,$ wherein
*Hₖ* represents a channel response coefficient, on a frequency domain unit k, determined based on the measurement result of the target reference signal, *N*₁ is determined based on a bandwidth of the target reference signal; or *N*₁ represents a quantity of inverse discrete Fourier transform IDFT points, and *A*₁ is a constant.

11. The method according to claim 1, wherein the second signal power is calculated according to one of the following formulas: ${A}_{2} {\int }_{f ∈ Λ} {\left|{\sum }_{i} {H}_{i} exp \left(j2{πfT}_{i}\right)\right|}^{2} ,$ or ${A}_{2} {\sum }_{f ∈ Λ} {\left|{\sum }_{i} {H}_{i} exp \left(j2{πfT}_{i}\right)\right|}^{2} ,$ wherein
*Λ* represents the first Doppler frequency range, *Hᵢ* represents a channel response coefficient, on a time unit i, determined based on the measurement result of the target reference signal, f represents a Doppler frequency within the first Doppler frequency range, and *Tᵢ* represents a moment corresponding to the time unit i.

12. The method according to claim 1, wherein the second signal power is determined based on a power of a path with a highest power among multiple target paths, the multiple target paths are multiple paths determined based on the target reference signal, and a Doppler frequency of each of the multiple target paths falls within the first Doppler frequency range; and
a power of a path whose Doppler frequency is *f* is determined according to the following formula: ${A}_{2} {\left|{\sum }_{i} {H}_{i} exp \left(-j2{πfT}_{i}\right)\right|}^{2} ,$ wherein
*Hᵢ* represents a channel response coefficient, on a time unit i, determined based on the measurement result of the target reference signal, *Tᵢ* represents a moment corresponding to the time unit i, and f represents a Doppler frequency within the first Doppler frequency range.

13. The method according to claim 1, wherein the first Doppler frequency range is predefined as a non-zero Doppler frequency range.

14. The method according to claim 1, wherein the similarity is a similarity between a delay spectrum of the target reference signal and a delay spectrum of the baseline reference signal, or the similarity is a similarity between a Doppler spectrum of the target reference signal and a Doppler spectrum of the baseline reference signal, or the similarity is a similarity between a delay-Doppler spectrum of the target reference signal and a delay-Doppler spectrum of the baseline reference signal.

15. The method according to claim 1, wherein the baseline reference signal is associated with a baseline beam, the target reference signal is associated with a target beam, and the target beam covers the baseline beam.

16. A communication method, applied to a third apparatus, wherein the method comprises:
receiving information about a target reference signal and/or beam information associated with the target reference signal reported by a first apparatus, wherein the target reference signal is a reference signal that meets a first condition, and the first condition comprises at least one of the following:
a first signal power obtained by measuring the target reference signal is greater than or equal to a first power threshold, wherein the first signal power is a signal power within a first delay range;
a second signal power obtained by measuring the target reference signal is greater than or equal to a second power threshold, wherein the second signal power is a signal power within a first Doppler frequency range;
a third signal power obtained by measuring the target reference signal is greater than or equal to a third power threshold, wherein the third signal power is a signal power within the first Doppler frequency range and the first delay range;
determining, based on the target reference signal, that a scatterer is present;
determining, based on the target reference signal, that a mobile scatterer is present;
determining, based on the target reference signal, that a probability of scatterer presence is greater than or equal to a first probability threshold;
determining, based on the target reference signal, that a probability of mobile scatterer presence is greater than or equal to a second probability threshold;
a similarity between a measurement result of the target reference signal and a measurement result of a baseline reference signal is less than or equal to a similarity threshold, wherein the baseline reference signal is associated with the target reference signal; and
a variation of a measurement result of the target reference signal is greater than or equal to a variation threshold.

17. The method according to claim 16, wherein before the receiving the information about the target reference signal reported by the first apparatus, further comprising:
sending configuration information to the first apparatus, wherein the configuration information indicates the first apparatus to report information about a reference signal that meets the first condition.

18. The method according to claim 16 or 17, wherein before the receiving the information about the target reference signal reported by the first apparatus, further comprising:
sending configuration information to the first apparatus, wherein the configuration information comprises at least one of the following:
the first power threshold, the first delay range, the second power threshold, the first Doppler frequency range, the third power threshold, the first probability threshold, the second probability threshold, the similarity threshold, and the variation threshold.

19. The method according to claim 16, further comprising:
sending at least one reference signal to the first apparatus, wherein the at least one reference signal comprises the target reference signal.

20. The method according to claim 16, wherein before the receiving the information about the target reference signal reported by the first apparatus, further comprising:
sending configuration information to the first apparatus, wherein the configuration information comprises information about at least one transmit beam and/or information about at least one receive beam, each of the at least one reference signal is associated with one of the at least one transmit beam, and/or each of the at least one reference signal is associated with one of the at least one receive beam.

21. A communication apparatus, comprising a transceiver module configured to perform the communication method according to any one of claims 1 to 15.

22. A communication apparatus, comprising a transceiver module configured to perform the communication method according to any one of claims 16 to 20.

23. A communication system, comprising a first apparatus and a third apparatus, wherein the first apparatus is configured to perform the communication method according to any one of claims 1 to 15, and the third apparatus is configured to perform the communication method according to any one of claims 16 to 20.

24. The system according to claim 23, further comprising a second apparatus configured to send at least one reference signal to the first apparatus.

25. A computer-readable storage medium storing computer instructions, comprising:
computer instructions, wherein when the computer instructions are executed, the computer is caused to perform the method according to any one of claims 1 to 20.

26. A computer program product, wherein the computer program product comprises computer program code, and when the computer program code is run by a computer, the computer is caused to perform the method according to any one of claims 1 to 15 or the method according to any one of claims 16 to 20.
